(19) Europäisches Patentamt
European Patent Office
Office européen des brevets

(11) **EP 4 075 411 A1**

(12) **EUROPEAN PATENT APPLICATION**
published in accordance with Art. 153(4) EPC

(43) Date of publication:
**19.10.2022 Bulletin 2022/42**

(21) Application number: **21792242.6**

(22) Date of filing: **20.04.2021**

(51) International Patent Classification (IPC):
**G09B 19/04** (2006.01)     **G09B 9/00** (2006.01)
**G10L 15/26** (2006.01)

(52) Cooperative Patent Classification (CPC):
**G06F 40/12; G06F 40/166; G06Q 50/10;**
**G09B 9/00; G09B 19/04; G10L 15/26**

(86) International application number:
**PCT/KR2021/004968**

(87) International publication number:
**WO 2021/215804 (28.10.2021 Gazette 2021/43)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **24.04.2020 IN 202011017660**

(71) Applicant: **Samsung Electronics Co., Ltd.**
**Gyeonggi-do, 16677 (KR)**

(72) Inventors:
• **DASGUPTA, Sumantra**
  **Gyeonggi-do, 16677 (KR)**
• **VERMA, Abhishek**
  **Gyeonggi-do, 16677 (KR)**
• **GUPTA, Sachin Kumar**
  **Gyeonggi-do, 16677 (KR)**
• **GOYAL, Agam**
  **Gyeonggi-do, 16677 (KR)**

(74) Representative: **Appleyard Lees IP LLP**
**15 Clare Road**
**Halifax HX1 2HY (GB)**

(54) **DEVICE AND METHOD FOR PROVIDING INTERACTIVE AUDIENCE SIMULATION**

(57)     Provided are a device and method for providing a virtual audience. The device for providing a virtual audience includes receiving a voice signal indicating a speech of a user; converting the speech in the received voice signal into text; determining a topic of the speech based on the converted text; identifying a plurality of entities included in the speech that are relevant to the determined topic; generating questions applicable to the speech using the identified plurality of entities in the speech; and providing a virtual audience uttering the generated questions.

FIG. 1

EP 4 075 411 A1

**Description**

TECHNICAL FIELD

The disclosure relates to a method and device for providing a virtual audience to a user requiring a rehearsal.

BACKGROUND ART

Fear of public speaking is faced by orators and public-speakers by and large. A person, while on stage as an orator and delivering a speech, often worries how the audience will react. An otherwise extremely knowledgeable person often faces a lack of confidence while delivering content to a live audience, unless the person has rehearsed multiple times in preparation. Accordingly, an orator has to prepare in front of a mirror, family, colleagues, etc.

However, a mirror falls short of rendering a true feel of a real and interactive audience. Family and friends do not always give consistent and constructive feedback due to indiscretions. Moreover, the so-called audience during rehearsal may themselves be unfamiliar with the topic. Accordingly, such rehearsals fall short of rendering a real-life sensation a person otherwise receives from a live-audience.

Various systems exist to generate a virtual audience for a rehearsing orator. The virtual audience reacts in real-time based on a presenter's body language and voice modulation. In an example, existing systems provide real-time feedback to the rehearsing orator, by rendering the audience behavior to be friendly, distracting and dis-interested. Yet such a virtual audience is often found to remain more like mute-spectators and they do not substantially query the speaker. Accordingly, the simulated environment does not emulate the actual real-life scenario at least in terms of queries or a volley of questions a user is likely to face from the audience.

DESCRIPTION OF EMBODIMENTS

TECHNICAL PROBLEM

Provided are a device that provides a virtual audience to utter a question to a user requiring a speech rehearsal and an operation method thereof.

SOLUTION TO PROBLEM

According to an embodiment of the disclosure, a method of providing a virtual audience includes receiving a voice signal indicating a speech of a user; converting the speech in the received voice signal into text; determining a topic of the speech based on the converted text; identifying a plurality of entities included in the speech that are relevant to the determined topic; generating questions applicable to the speech using the identified plurality of entities included in the speech; and providing a virtual audience uttering the generated questions.

The generating of the questions applicable to the speech using the identified plurality of entities included in the speech may include determining a logical relationship between a pair of entities among the identified plurality of entities; and generating the questions applicable to the speech based on the logical relationship,.

The method, performed by a device, of providing the virtual audience may further include determining a difficulty level with respect to the generated question, the providing of the virtual audience uttering the generated question may include determining a profile corresponding to the determined difficulty level and providing the virtual audience so that a virtual audience corresponding to the determined profile utters the question.

According to another embodiment of the disclosure, a device for providing a virtual audience includes a microphone; a memory storing one or more instructions; and a processor configured to execute the one or more instructions to: control the microphone to receive a voice signal indicating a speech of the user; convert the received speech signal into a text; determine a topic with respect to the speech based on the converted text; determine a plurality of entities included in the speech based on the determined topic; generate questions with respect to the speech using the determined plurality of entities; and provide a virtual audience uttering the generated questions.

The processor may also determine a logical relationship between a pair of entities among the determined plurality of entities; and based on the logical relationship, generate the questions with respect to the speech of the user.

The processor may also determine a difficulty level with respect to the generated question, determine a profile corresponding to the determined difficulty level and provide the virtual audience so that a virtual audience corresponding to the determined profile utters the question.

The processor may also receive an answer of the user to the question and output response information of the virtual audience to the answer of the user.

According to another embodiment of the disclosure, a computer-readable recording medium having recorded thereon a program for executing the method on a computer is provided.

**BRIEF DESCRIPTION OF DRAWINGS**

FIG. 1 illustrates a method, performed, by a device, of providing a virtual audience, according to an embodiment of the disclosure.
FIG. 2 illustrates examples of a device for providing a virtual audience, according to an embodiment of the disclosure.
FIG. 3 illustrates a method, performed by a device, of providing a virtual audience, according to an embodiment of the disclosure.
FIG. 4 is a block diagram of the device for providing a virtual audience, according to an embodiment of the disclosure.
FIGS. 5A, 5B, and 5C illustrate a method, performed by a device, of generating a plurality of questions based on text, according to an embodiment of the disclosure.
FIG. 6 illustrates a method, performed by a device, of storing a question-answer pair, according to an embodiment of the disclosure.
FIG. 7 illustrates a method, performed by a device, of generating a question including an entity not included in a user's speech, according to an embodiment of the disclosure.
FIGS. 8A to 8C illustrate a method, performed by a device, of generating a question including an entity not included in a user's speech by using a document DB, according to an embodiment of the disclosure.
FIGS. 9A and 9B illustrate a method, performed by a device, of generating a question based on a document input by a user, according to an embodiment of the disclosure.
FIG. 10 illustrates a method, performed by a device, of outputting a question selected by a user from among a plurality of questions, according to an embodiment of the disclosure.
FIG. 11 illustrates a method, performed by a device, of providing a menu for selecting one of a plurality of questions, according to an embodiment of the disclosure.
FIG. 12 illustrates a method, performed a device, of determining timing to utter a question, according to an embodiment of the disclosure.
FIG. 13 illustrates a method, performed by a device, of selecting a virtual audience uttering a question based on a difficulty level of a question, according to an embodiment of the disclosure.
FIG. 14 illustrates a method, performed by a device, of determining a difficulty level of a question, according to an embodiment of the disclosure.
FIG. 15 illustrates a method, performed by a device, of mapping a question to a virtual audience according to a difficulty level of the question, according to an embodiment of the disclosure.
FIG. 16 illustrates a method, performed by a device, of changing a virtual audience according to a topic of a user's speech, according to an embodiment of the disclosure.
FIG. 17 illustrates a method, performed by a device, of validating a user's answer to a question uttered by a virtual audience, according to an embodiment of the disclosure.
FIG. 18 illustrates a method, performed by a device, of providing a response of a virtual audience to a user's answer through a follow-up question, according to an embodiment of the disclosure.
FIG. 19 illustrates a method, performed by a device, of displaying simulated-visuals of a virtual audience, according to an embodiment of the disclosure.
FIG. 20 illustrates a method of controlling a device to distribute questions and a virtual audience to utter the questions, according to an embodiment of the disclosure.
FIG. 21 is a block diagram of a device providing a virtual audience, according to an embodiment of the disclosure.
FIG. 22 illustrates an example architecture depicting an aggregation of an AR/VR based mechanism and an ML/NLP based mechanism, according to an embodiment of the disclosure.
FIG. 23 is a block diagram of a device providing a virtual audience, according to another embodiment of the disclosure.

MODE OF DISCLOSURE

Embodiments of the disclosure will be described in detail in order to fully convey the scope of the disclosure and enable one of ordinary skill in the art to embody and practice the disclosure. The disclosure may, however, be embodied in many different forms and should not be construed as being limited to the embodiments set forth herein. Also, parts in the drawings unrelated to the detailed description are omitted to ensure clarity of the disclosure. Like reference numerals in the drawings denote like elements.
The terms used in the disclosure are selected from among common terms that are currently widely used in consideration of their function in the disclosure. However, the terms may be different according to an intention of one of ordinary skill in the art, a precedent, or the advent of new technology. Therefore, the terms used in the disclosure are not merely designations of the terms, but the terms are defined based on the meaning of the terms and content throughout the disclosure.

While such terms as "first," "second," etc., may be used to describe various elements, such elements must not be limited to the above terms. The above terms are used only to distinguish one element from another.

The terms used in the disclosure are merely used to describe embodiments of the disclosure, and are not intended to limit the disclosure. An expression used in the singular encompasses the expression of the plural, unless it has a clearly different meaning in the context. Throughout the specification, it will be understood that when an element is referred to as being "connected" to another element, it may be "directly connected" to the other element or "electrically connected" to the other element with intervening elements therebetween. It will be understood that when an element is referred to as "including" another element, the element may further include other elements unless mentioned otherwise.

The term "the" and demonstratives similar thereto in the present specification, in particular, in the claims, may be understood to include both singular and plural forms. Operations of a method may be performed in an appropriate order unless explicitly stated or contradicted to the order of the operations. It is not necessarily limited to the order of description of the operations.

Phrases such as "in some embodiments" and "in an embodiment" in the present specification do not indicate the same embodiment of the disclosure.

The disclosure may be described in terms of functional block elements and various processing steps. Some or all functional blocks may be realized as any number of hardware and/or software elements configured to perform the specified functions. For example, the functional blocks may be realized by at least one micro-processor or circuits for performing certain functions. Also, the functional blocks may be realized with any programming or scripting language. The functional blocks may be realized in the various algorithms that are executed on one or more processors. Furthermore, the disclosure may employ any number of conventional techniques for electronics configuration, signal processing and/or control, data processing and the like. The words "mechanism", "element", "means", and "configuration" are used broadly and are not limited to mechanical or physical embodiments of the disclosure.

Furthermore, the connecting lines, or connectors shown in the various figures presented are intended to represent exemplary functional relationships and/or physical or logical couplings between the various elements. It should be noted that many alternative or additional functional relationships, physical connections or logical connections may be present in a practical device.

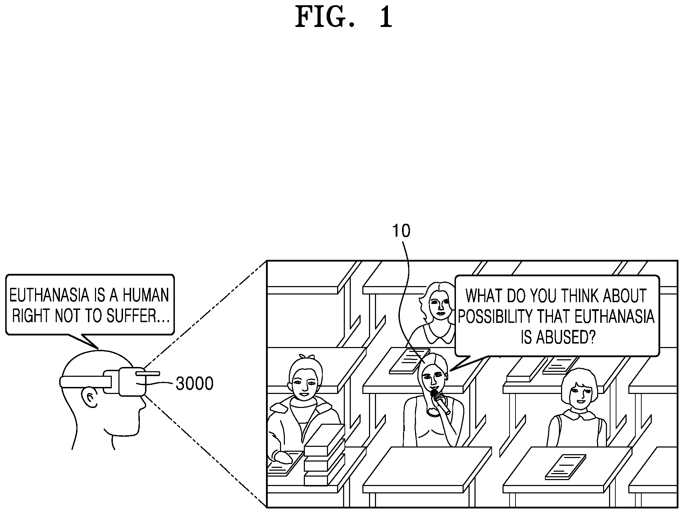

FIG. 1 illustrates a method, performed, by a device 3000, of providing a virtual audience according to an embodiment of the disclosure.

The device 3000 may provide the virtual audience to a user giving a speech. The device 3000 may analyze a user's language to generate a question suitable for content to be delivered by the user and output the virtual audience that utters the generated question.

The device 3000 may semantically analyze a user's speech to generate at least one question.

The device 3000 according to an embodiment of the disclosure may receive the user's speech including a content "euthanasia is a human right not to suffer", and provide the virtual audience that utters a question "what is the euthanasia?"

In addition, as shown in FIG. 1, the device 3000 according to an embodiment of the disclosure may receive the user's speech including the content "euthanasia is a human right not to suffer", generate a question "what do you think about the possibility that euthanasia is abused?" that is difficult to derive directly from the user's speech, and provide a virtual audience 10 that utters the generated question.

For example, the device 3000 may determine a topic for the user's speech as "euthanasia" or "necessity of a euthanasia", receive a document related to the topic from a database, and generate the question that is difficult to derive directly from the user's speech based on the received document.

Also, for example, the device 3000 may receive a user input for inputting question data for a speech, and generate a question that is difficult to derive directly from the user's speech based on the received question data.

The device 3000 may represent the virtual audience as several characters listening to a user's presentation. In addition, the device 3000 may represent the virtual audience as an interviewee answering a user's question, or may represent the virtual audience as an interviewer that interviews the user. In addition, the device 3000 may represent the virtual audience as a debater discussing an arbitrary topic with the user.

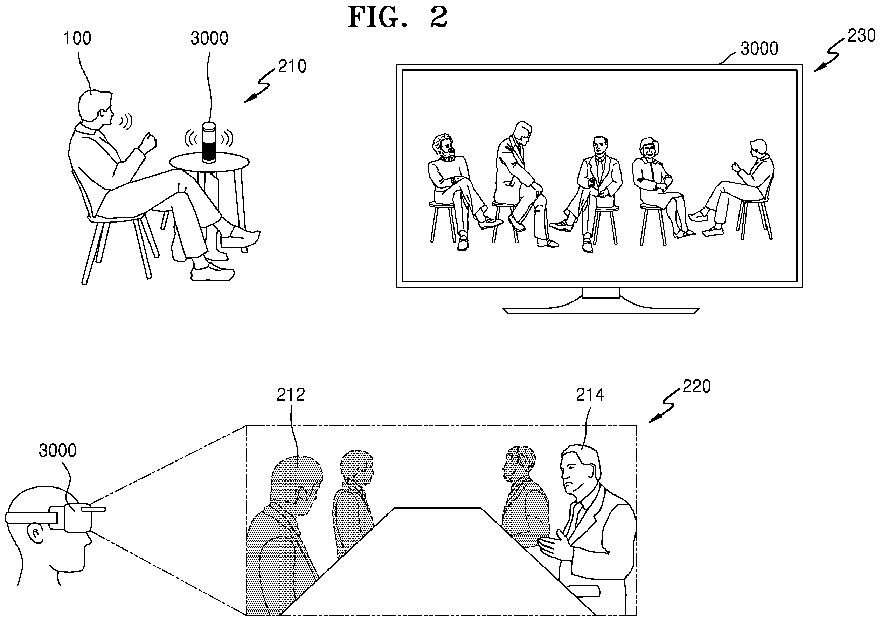

FIG. 2 illustrates examples of the device 3000 for providing a virtual audience according to an embodiment of the disclosure.

The device 3000 may output a question through a speaker built in the device 3000 or a speaker connected to the device 3000, and display an image of the virtual audience through a screen built in the device 3000 or a screen connected to the device 3000.

The device 3000 may be a virtual reality (VR) device.

Also, the device 3000 may be a mobile phone. When the device 3000 is the mobile phone, the device 3000 may be mounted on the VR device, and output the image of the virtual audience, and thus the device 3000 may provide a VR image of the virtual audience to a user worn by the VR device.

In addition, as shown in 210 of FIG. 2, the device 3000 may be an artificial intelligence (AI) and voice-based interactive-computing device that interact through acoustics without any display. For example, the device 3000 may be an AI speaker. When the device 3000 is the AI speaker, the device 3000 may exhibit the virtual audience exclusively or inclusively with sound. Also, the device 3000 may provide instructions for starting a function of providing the virtual audience. For example, the device 3000 may receive a voice of a user 100 "Bixby, start a speech practice", so that the device may 3000 may generate a question about a speech of the user 100 based on the speech of the user 100, output the questioned question as a voice signal, and provide the virtual audience.

In addition, the device 3000 may exhibit diversity of the virtual audience, emotions expressed from the virtual audience, and satisfaction and/or dissatisfaction over an answer of the user based on voice modulation. The voice modulation may vary based on the profile of the virtual audience, and the profile may be linked to a competency level of the virtual audience. The device 3000 may perform different voice modulations based on age, sex, language, and competency level of the virtual audience.

In addition, as shown in 220 of FIG. 2, the device 3000 may be an augmented reality (AR) device. When the device 3000 is the AR device, the device 3000 may receive a user input for capturing a real-life audience 214, so that the device 3000 may display a virtual audience image 212 together with an image of the captured real-life audience 214.

Also, as shown in 230 of FIG. 2, the device 3000 may be a TV. When the device 3000 is the TV, the device 3000 may provide a menu or button for starting a function of providing the virtual audience. Also, the device 3000 may control the function of providing the virtual audience based on a user input for controlling the device 3000 by using a remote controller.

The device 3000 may provide a virtual audience for various rehearsals. For example, as shown 210 of in FIG. 2, a virtual audience for an interview may be provided, and as shown in 220 of FIG. 2, a virtual audience for discussion may be provided. When the virtual audience for discussion is provided, the device 3000 may predict a next topic of discussion and provide the next topic to the user.

The device 3000 may provide a virtual audience with a parental-training directed to kids to come up with various answering-strategies on given topics. For example, given a topic, the device 3000 may provide a virtual audience for the user to formulate questions and answers befitting a kid of a particular age group. The device 3000 may process a text and provide a virtual audience suggesting further reading material to a research scholar based on the derived context. In addition, to test understanding of the text, the device 3000 may provide a virtual audience to generate questions and answers on the topic of the text and undertake a self-evaluation graded test.

The device 3000 may provide a virtual audience providing virtual health/fitness expert advice to the user. Further, based on an initial statement provided by the user, the device 3000 may keep on querying the user for additional information, until it has some actionable items. The device 3000 may provide a virtual audience providing tips on various topics related to personal health like diet, exercise, and mental health/stress control, etc.

The device 3000 may provide a virtual audience providing real-time conversation support to the user. For example, the device 3000 may provide a virtual audience analyzing the conversation between the user and his colleague and actively or passively advising the user wherever the device 3000 senses a hesitation or lack of understanding of the user. The device 3000 may obtain pauses, facial/bodily gestures and actual user responses to get a measure of the user's participation in the conversation.

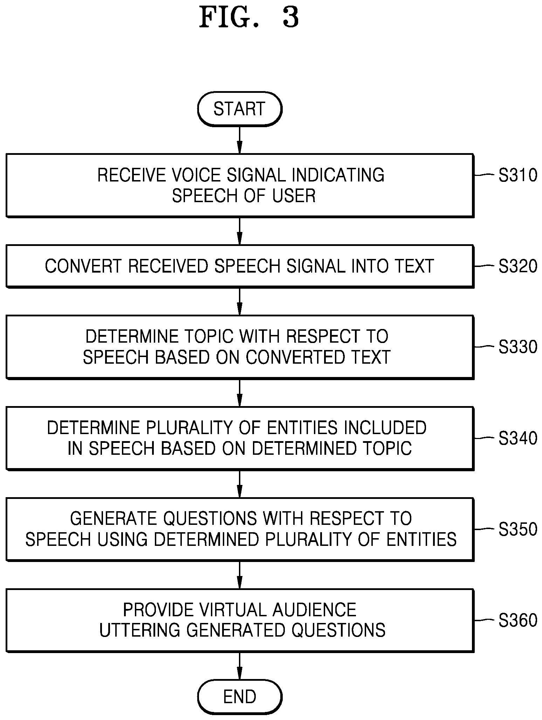

FIG. 3 illustrates a method, performed by the device 3000, of providing a virtual audience according to an embodiment of the disclosure.

In operation S310, the device 3000 may receive a voice signal indicating a user's speech.

The device 3000 may receive a voice signal indicating the user's speech through a microphone mounted on the device 3000 or a microphone connected to the device 3000.

In operation S320, the device 3000 may convert the received voice signal into text. For example, the device 3000 may convert the received voice signal into text using a voice-to-text converter.

In operation S330, the device 3000 may determine a topic with respect to the speech based on the converted text.

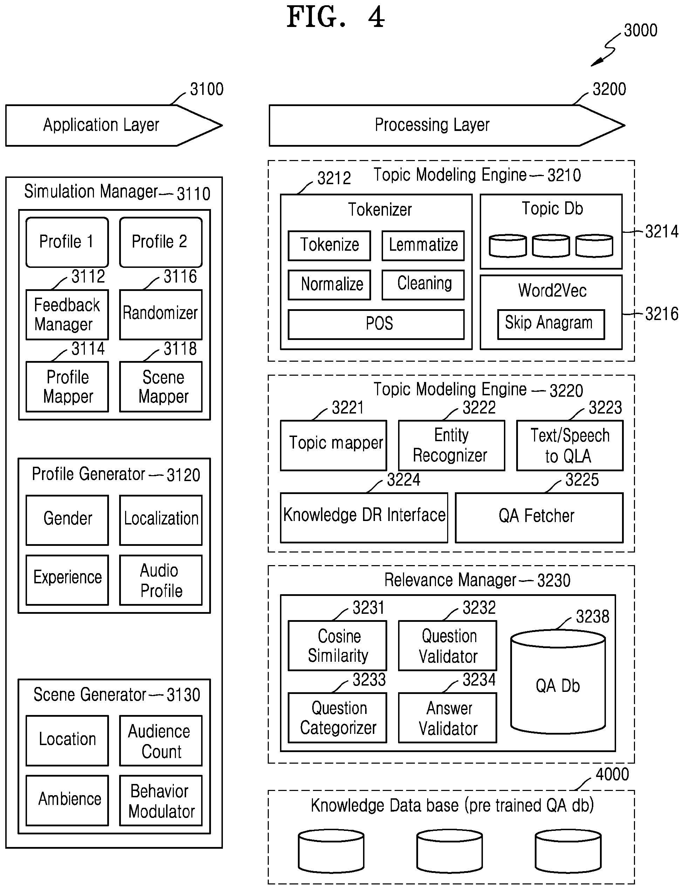

The device 3000 may determine a topic of the text using machine learning or deep learning technology, but is not limited thereto. An embodiment in which the device 3000 determines the topic will be described later with reference to FIG. 4.

In operation S340, the device 3000 may determine a plurality of entities included in the speech based on the determined topic.

In the disclosure, an entity may mean a unit of information. In addition, in the disclosure, an entity may be regarded as a named-entity. According to an embodiment of the disclosure, the device 3000 may determine the plurality of entities in the text by classifying words in the text into previously determined categories. For example, from a text 'Jim bought 300 shares of Samsung Corp. in 2006.', the device 3000 may determine 'Jim' as a human entity, 'Samsung Corp.' as an organization entity, and '2006' as a temporal entity.

In addition, the device 3000 may determine the plurality of entities from the text using various named-entity recognition technologies.

In operation S350, the device 3000 may generate a question with respect to the speech using the determined plurality of entities.

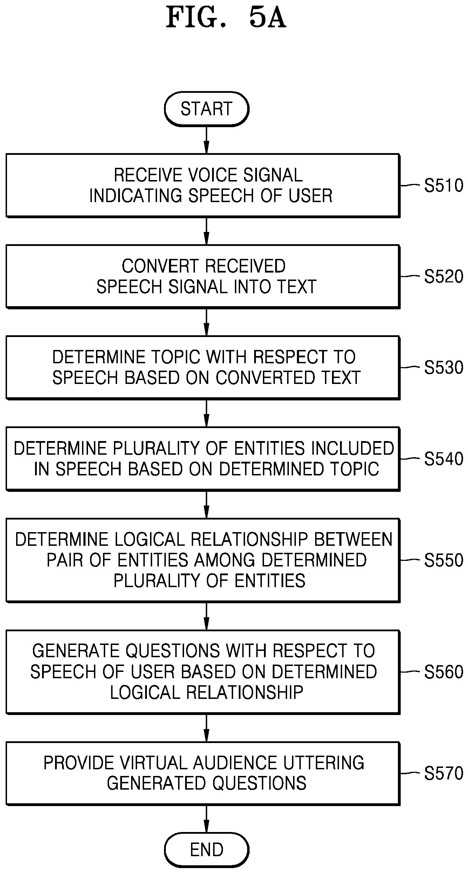

The device 3000 may determine a logical relation between a pair of entities among a plurality of identified first entities. The device 3000 may generate the question with respect to the user's speech based on the determined logical relation. A method of generating a question based on the first entities will be described later with reference to FIGS. 5A to 5B.

As another embodiment, the device 3000 may receive a document related to the topic from a document DB, and generate the question with respect to the speech based on the determined topic and the found document. Because the question is generated based on the document received from the document DB along with the user's speech, not only the user's speech, the device 3000 may generate a question including an entity that is not included in the user's speech. The question including the entity that is not included in the user's speech may be a question that is difficult to be derived directly from the user's speech.

For example, the device 3000 may receive the document related to the topic from the document DB based on the determined topic, and determine a plurality of second entities included in the received document. The device 3000 may determine a logical relation between a pair of entities among the plurality of second entities included in the received document. The device 3000 may generate the question with respect to the speech based on the determined logical relation between the pair of entities.

In addition, as another example, the device 3000 may determine a logical relation between a pair of entities including one of the plurality of first entities included in the user's speech and one of the plurality of second entities included in the received document. The device 3000 may generate the question with respect to the speech based on the determined logical relation.

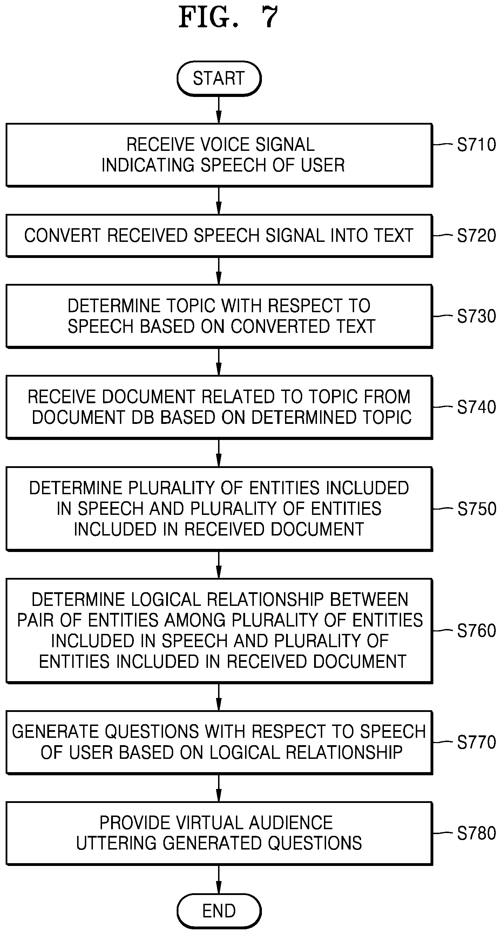

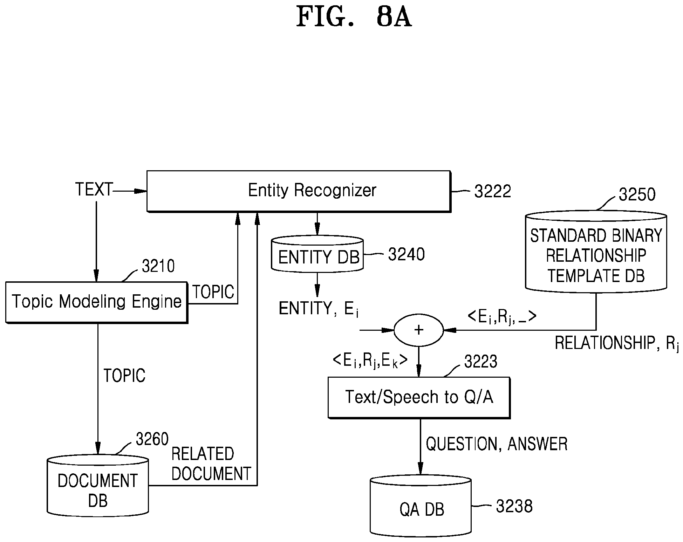

A method of generating the question based on the first entities and the second entities or a method of generating the question based on the second entities will be described later with reference to FIGS. 7 and 8A to 8C.

The document DB may be a database in which documents related to a topic are stored in correspondence to the topic. For example, the document DB may be a database that stores documents prepared by the general public using a website or a mobile app.

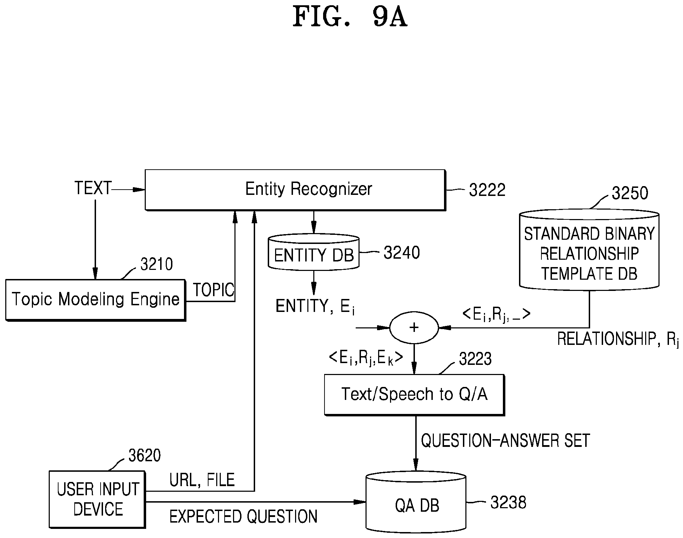

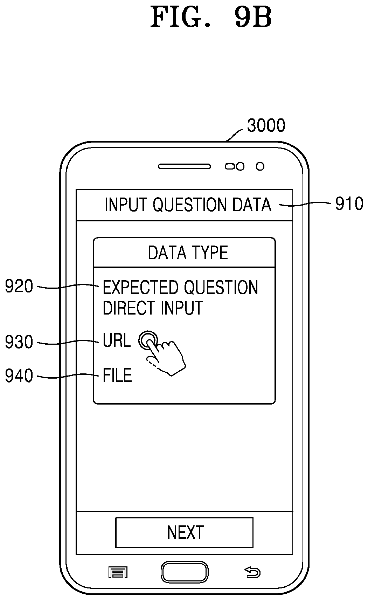

As another embodiment, the device 3000 may generate the question with respect to the user's speech based on question data received from the user. To this end, the device 3000 may provide a menu for receiving the question data. The question data may be in a file format or in a URL format. A method of receiving a user input for inputting the question data will be described later with reference to FIGS. 9A and 9B.

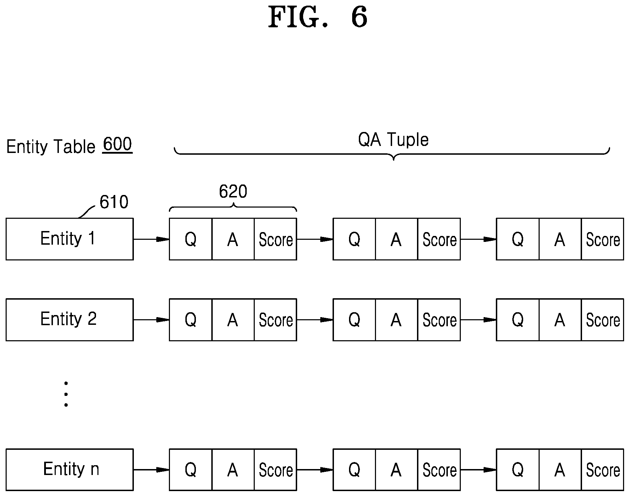

According to an embodiment, the device 3000 may generate a plurality of questions regarding the user's speech based on the converted text. A method of generating the plurality of questions regarding the user's speech will be described later with reference to FIG. 6.

According to an embodiment, the device 3000 may determine not only the question with respect to the user's speech but also an answer to the question based on the converted text.

In operation S360, the device 3000 may provide a virtual audience uttering the generated question.

The device 3000 may convert the generated question into voice data. In addition, the device 3000 may provide a virtual audience uttering the question by outputting the converted voice data and simultaneously displaying a virtual audience member so that the virtual audience member appears to utter the question.

When the device 3000 is an AI speaker, the device 3000 may provide a virtual audience uttering the question by outputting only the converted voice data.

When the device 3000 detects a previously determined trigger text from the converted text, the device 3000 may output the virtual audience so that the virtual audience utters the generated question.

In addition, the device 3000 may calculate a time during which the voice signal is not continuously received, and, when the calculated time exceeds a previously determined threshold time, output a virtual audience so that the virtual audience utters the generated question.

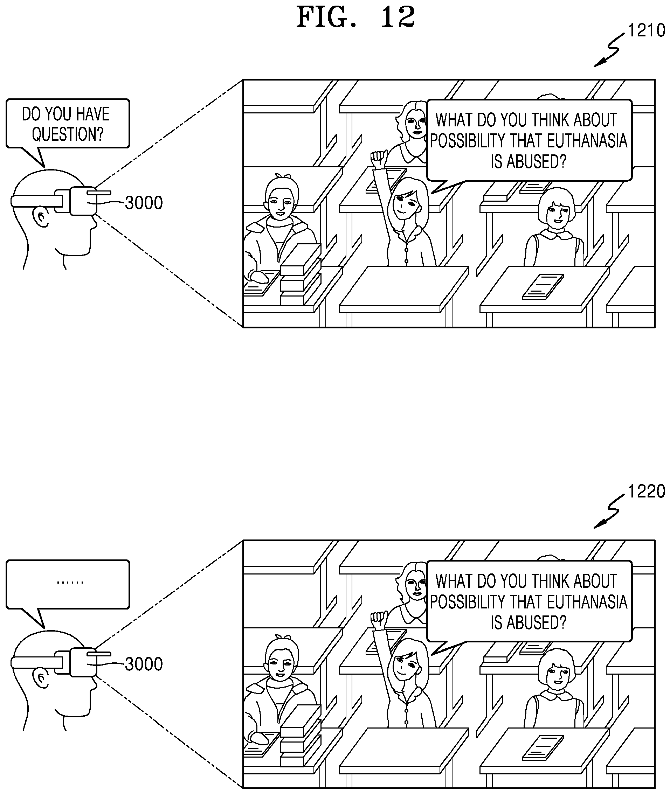

A description of the timing at which the virtual audience utters the question will be given later with reference to FIG. 12.

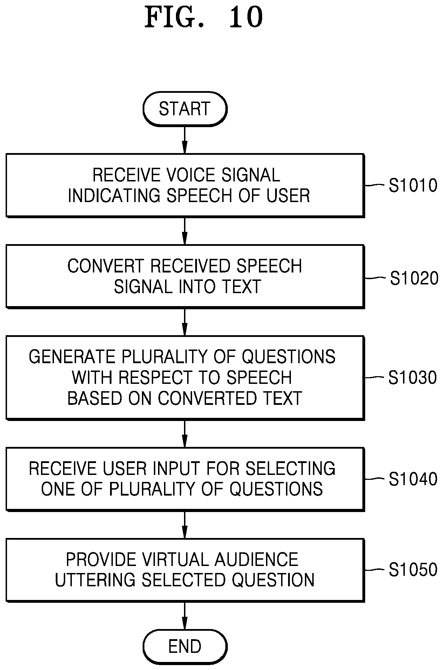

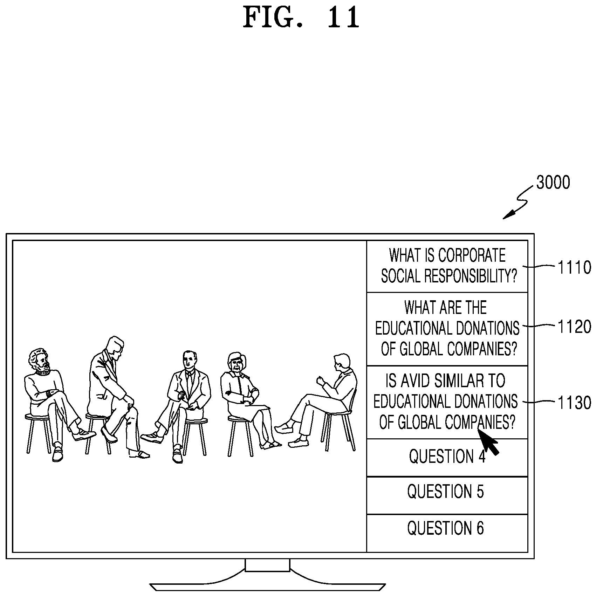

The device 3000 may provide a virtual audience uttering the question selected by the user based on a user input. To this end, the device 3000 may display a plurality of questions and receive a user input for selecting one of the displayed plurality of questions. A method of receiving the user input for selecting one of the plurality of questions will be described later with reference to FIGS. 10 and 11.

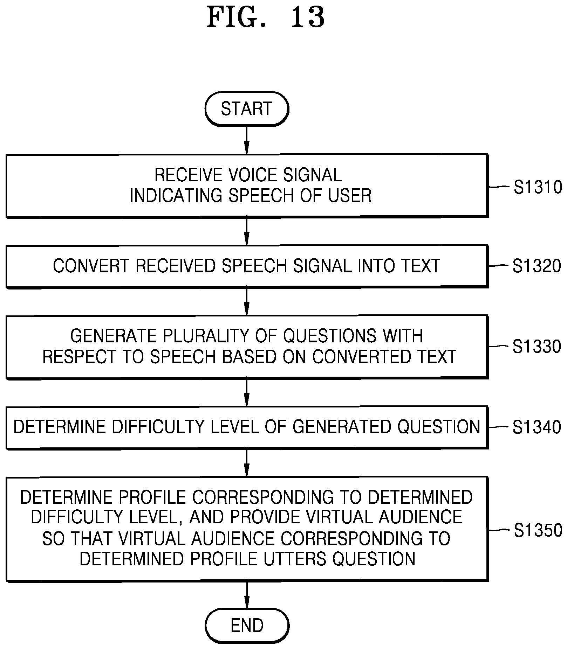

The device 3000 may determine a difficulty level with respect to the generated question, determine a profile corresponding to the determined difficulty level, and provide a virtual audience so that the virtual audience corresponding to the determined profile utters the question. A method of providing a virtual audience according to the difficulty level of the question will be described later with reference to FIGS. 13, 14 and 15.

The device 3000 may receive an answer to the question from the user. For example, the device 3000 may receive a voice signal of the user after the virtual audience utters the question as the answer to the question from the user.

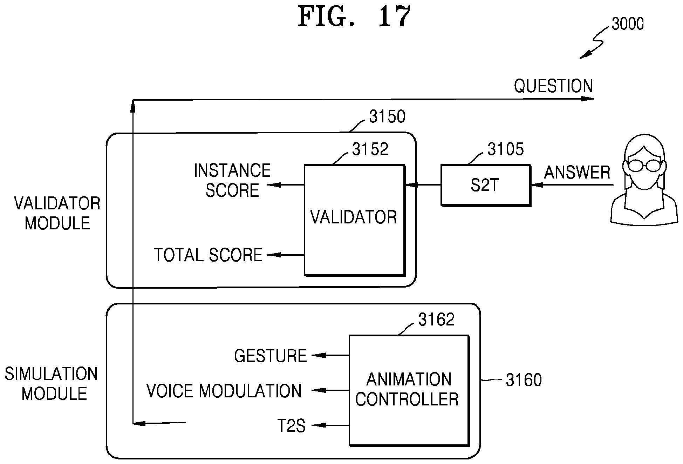

The device 3000 may output reaction information of the virtual audience to the answer of the user based on the answer of the user. For example, the device 3000 may determine an answer to the question in advance, compare the determined answer with the answer received from the user, and determine the similarity of the answer of the user. The device 3000 may output the reaction information of the virtual audience based on the similarity of the answer of the user. The device 3000 may express the reaction information of the virtual audience as facial expressions, facial/bodily gestures, or exclamation of the virtual audience, but is not limited thereto. A method of outputting the reaction information of the virtual audience will be described later with reference to FIGS. 17 to 20.

FIG. 4 is a block diagram of the device 3000 for providing a virtual audience according to an embodiment of the disclosure.

The device 3000 may receive a voice signal indicating a user's speech or answer and convert the received voice signal into text.

Referring to FIG. 4, the device 3000 may include an application layer 3100 and a processing layer 3200. Each of components included in the application layer 3100 or the processing layer 3200 may be implemented by hardware or by software.

The processing layer 3200 may include a topic modeling engine 3210, a Q/A generator 3220, a relevance manager 3230, and a knowledge DB 4000. The processing layer 3200 may be a module located outside the device 3000 and accessed from the device 300 according to an embodiment of the disclosure. For example, the processing layer 3200 may be a module located in a cloud server. In addition, the topic modeling engine 3210, the Q/A generator 3220, the relevance manager 3230, and the knowledge DB 4000 in the processing layer 3200 may be modules located in the device 3000 and may be modules located outside and accessed from the device 3000.

The topic modeling engine 3210 may process the converted text according as natural language processing (NLP) steps to determine a topic of content delivered from a user.

The topic modeling engine 3210 may include a tokenizer 3212, a topic DB 3214, and a word2Vec 3216. The tokenizer 3212 may include a tokenize module, a lemmatize module, a normalize module, and a part of speech (POS) module.

a) The tokenize module may break a converted text (speech to text converted) or sentence into words using tokenization technique of space characters.
b) The lemmatize module may remove a prefix and a postfix from the broken words using predefined words corpus.
c) The normalize module may convert non-standard words to standard words. For example, the normalize module may convert non-standard words to standard words by either a predefined set of synonyms or using text simplification techniques or other predefined techniques.
d) The POS module may determine part of speech of each of the converted standard words to tag the part of speech to standard words.
e) A word embedding module may refer a neural network module or a deep learning based module such as the word2Vec 3216. The word embedding module may assign the vector-value to standard words to which the part of speech is tagged in a spatial coordinate system. For example, the word2Vec 3216 may have 300 standard words axes and map each tagged word to one of standard words axes. The word embedding module may determine word vectors corresponding to the tagged words based on the mapped standard words axes and use a skip anagram technique to identify the topic based on the determined word vectors.
f) The topic database 3214 may output one or more topics based on the keywords. The device 3000 may lookup for topics from the topic DB 3214 based on the standard words.

Also, the device 3000 may rank the topics based on probability of accuracies or weights

The topic modeling engine 3210 according to an embodiment of the disclosure may identify a topic from the tagged words using training of machine-learning (ML).

The Q/A Generator 3220 may generate a set of questions and answers based on the determined topic, or may fetch questions and answers from the knowledge DB 4000.

In addition, the Q/A generator 3220 may receive a document related to the topic from the document DB 3260 of FIG. 8A, and may generate questions and answers based on the received document and the determined topic.

The Q/A generator 3220 may include a topic mapper 3221, an entity recognizer 3222, a text/speech to Q/A 3223, a knowledge DB interface 3224, and a QA fetcher 3225.

The text/speech to Q/A 3223 may generate a question based on the text converted from the user's speech. The QA fetcher 3225 may fetch the question from the QA DB 3238 based on the converted text. The QA fetcher 3225 may be assisted by the topic mapper 3221 and the entity recognizer 3222 to fetch a related question from the knowledge DB 4000.

The knowledge DB 4000 is a pre-trained QA DB that may store questions on various topics, and can store the set of questions and answers generated by pre-training various texts. The device 3000 may fetch the question from the knowledge DB 4000 based on the entity. The knowledge DB 4000 may provide a topic-based lookup and the device 3000 may fetch questions from the knowledge DB 4000 based on the topic and entities.

The knowledge DB Interface 3224 may be configured as an API for access to the knowledge DB 4000, and the device 3000 may access a pre-generated question in the knowledge DB 4000 based on the API. The API may be programmed using usual CRUD operations that are suitable for fetching records stored in the knowledge DB 4000.

The relevance manager 3230 may validate the generated question. Also, the relevance manager 3230 may log question-answer pairs into the QA DB 3238 to store the question-answer pairs in the QA DB 3238. The relevance manager 3230 may map the answer provided by the user with the previously created profile of the virtual audience.

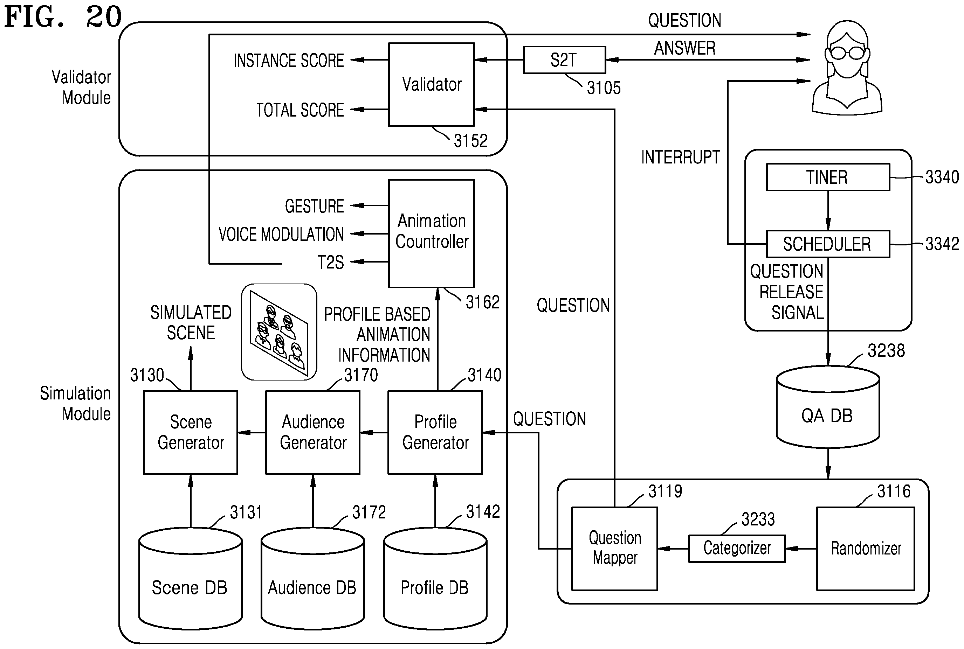

The relevance manager 3230 may include a scheduler 3342 of FIG. 20 for triggering the access to the QA DB 3238 for fetching questions. The question validator 3232 may validate questions fetched from the QA DB 3238 using a cosine similarity 3231. The device 3000 may validate the fetched questions based on the topic of the user's speech. The answer validator 3234 may validate the answer provided by the user. The answer validator 3234 may access a predefined answer stored in the QA DB 3238 and grade the answer provided by the user based on the accessed answer.

The application layer 202 may include a simulation manager 3110, a profile generator 3120, and a scene generator 3130. The profile generator 3120 may create profiles of virtual audience. The simulation manager 3110 may create simulated virtual audience in the form of graphics and audio based on the configured profile settings. The simulation manager 3110 may generate a scene or a virtual environment through the scene generator 3130. The scene generator 218 may control the behaviour of the virtual audience for raising the generated questions or providing feedback to a user via gestures.

The simulation manager 3110 may create simulated virtual audience based on the profile settings. Also, the simulation manager 3110 may generate scene and the virtual audience (graphics and audio) of a rehearsal and animating the virtual audience for asking questions and providing feedback to the user via gestures.

The simulation manager 3110 may include:

a) A scene mapper 3118 for determining how the virtual audience (that personify the profiles) should react or behave in a particular ambience or scenario.
b) A profile-manager 3114 for mapping the question with a particular profile based on the category (i.e. a difficulty level) of the question.
c) A randomizer 3116 acting as a profile-randomizer for assigning the question.
The randomizer 3116 may map the question with a profile. The randomizer 3116 may further assign the question randomly to a particular audience-member.
d) A feedback manager 3112 for generating real-time feedback from the simulated virtual audience in form of uttered questions, gestures or behavior in response to the delivered content by the virtual audience and the response offered by the virtual audience against the raised question.
Further, the scene mapper 3118 and the feedback manager 3112 may constitute an animation controller 3162 of FIG. 17.
e) A profile generator 3120 for creating virtual-audience defining various profiles.
With respect to each profile and/or a competency level, the virtual audience may, in turn, differ based on gender, localization, experience, and audio profile. For example, the profiles may be based on predefined competency levels of virtual audience and may be categorized as follows in respect of an organization:

Fresher (Beginner Competency Level)
Developer (Advanced Competency Level)
Manager (Professional Competency Level)
Vice President (Expert Competency Level)

f) A scene generator 3130 for creating the ambience based on location, audience count, ambience, and behavior modulator.

The behavior modulator may denote as to how the virtual audience behave/react in different situation.

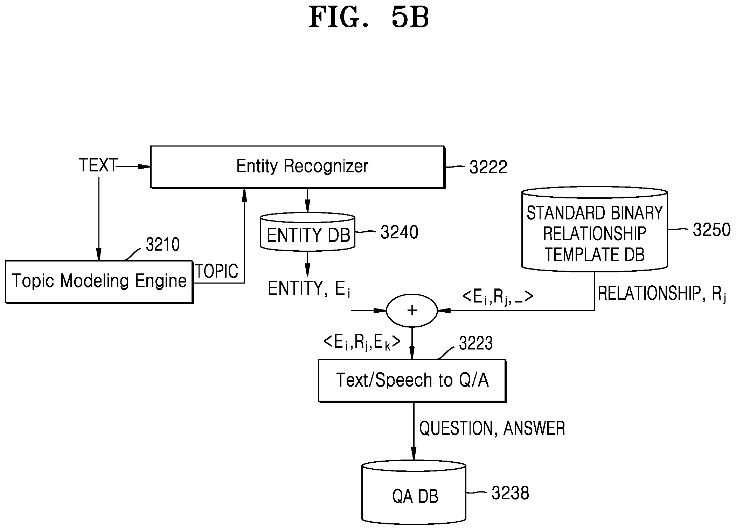

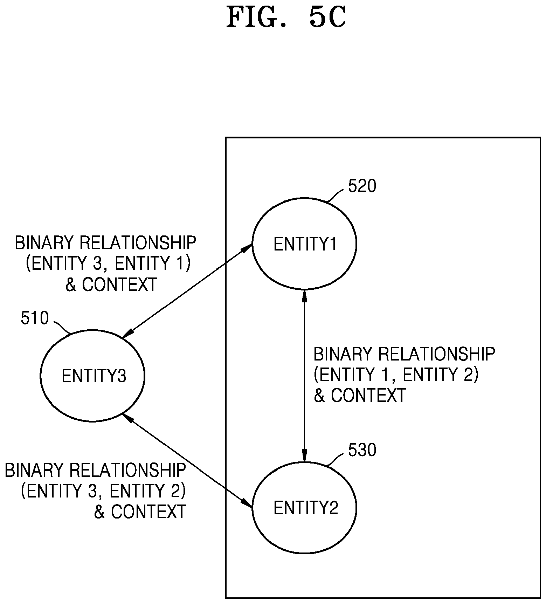

FIGS. 5A, 5B, and 5C illustrate a method, performed by the device 3000, of generating a plurality of questions based on text, according to an embodiment of the disclosure.

In operation S510 of FIG. 5A, the device 3000 may receive a voice signal indicating a user's speech. In operation S520, the device 3000 may convert the received voice signal into the text.

The device 3000 may convert the user's speech input into the text using a speech to text (S2T) module. For example, the captured text converted from eth user's speech may be determined as follows:

As part of company's corporate social responsibility commitment to advancing education and encouraging the next generation of innovators, Research America (RA) hosted a group of 18 local high school AVID students on October, 30th in their Mountain View, CA campus. Advancement Via Individual Determination (AVID) is an internationally recognized program designed to prepare underrepresented high school students for success in four-year colleges and universities. The program includes minority students, low-income students, first-generation college students, and students with special life circumstances.

In operation S530, the device 3000 may determine a topic for the speech based on the converted text.

The device 300 may generate information that may not be found within the content delivered by a user. Accordingly, answering the questions will require the user to introspect and analyse, and thereby receive an actual real-life experience.

The topic modeling engine 3210 may extract a topic from the converted text. The topic modeling engine 3210 may determine the topic using the word embedding module shown in FIG. 4 and fetch the topic from the topic DB 3214 based on the text.

Also, as a document is a combination of multiple-topics, the document may be thought to belong to multiple topics with varying degrees of accuracy. Each topic is also characterized by a set of words. Accordingly, the topic modeling engine 3210 may obtain topics through various techniques such as unsupervised learning, dimensionality reduction or clustering. The topic modeling engine 3210 may user the following techniques for topic modelling:

    a. NMF (Non-negative Matrix Factorization)
    b. LSA (Latent Semantic Analysis)
    c. LDA (Latent Dirichlet Allocation))

Referring to Table 1 below, the topic modeling engine 3210 may determine "Corporate Social Responsibility at Research America (RA)" and "AVID Students at Research America RA" as topics of the converted text.

**[Table 1]**

| Identified Topics | Relationship template | Named Entities | Binary Relation |
|---|---|---|---|
| 1. Corporate Social Responsibility at Research America (RA) ($T_{1t}$ and $W_{1t}$) 2. AVID Students at Research America RA ($T_{2t}$ and $W_{2t}$) | Is a <definition> Has a <part > Part of <entity> Member of <container> In <LOC> On <DATE-TIME> Is Similar to <entity> | Corporate Social Responsibility Education Next generation innovator Research America (RA) Group 18 Local high school AVID student October 30 Mountain View CA AVID Internationally recognized program Minority race students Low-income students First-generation college students Students with special life circumstances | <Corporate Social Responsibility> is a <definition; portion of it is in given text but more of it has to be searched from web> |
| | | | <Corporate Social Responsibility> is part of <RA in the given instance> |
| | | | <Corporate Social Responsibility> in <Mountain View CA> <Corporate Social Responsibility> on <Oct 30 2019> <Corporate Social Responsibility> is similar to < has to be searched from web> |

In operation S540, the device 3000 may determine a plurality of entities included in the speech based on the determined topic. The entity recognizer 3222 included in the Q/A generator 3220 may perform entity recognition. The device 3000 may identify all textual mentions of the entities through entity recognition. The device 3000 may identify all textual mentions of the entities by identifying boundaries of the entities and identifying types of the entities.

The entity recognizer 3222 may extract the entities from the converted text based on the given topic. The entity recognizer 3222 may also classify the extracted entities into classes such as location, person, date, etc. relevant to the topics. The device 3000 may identify boundaries of the entities by classifying the entities.

The device 3000 may identify the types of the entities from the classes of the entities. For example, the device 3000 may use chunkers which segment and label multi-token sequences within the converted text to identify the types of the entities from the classes of the entities. The device 3000 may construct chunkers using rule-based systems (regex parsers) or using machine learning techniques.

The device 3000 may identify only the entities relevant to the identified topic. The entity recognizer 3222 may classify the entities using machine-learning. Classifying the entities using machine-learning provides a better alternative than rule-based approaches that otherwise employ plain word search for entity recognition. For example, various learning models employed for entity recognition may include the following models:

a. HMM (Hidden Markov Model)
b. MEM (Maximum Entropy Model)
c. CRF (Conditional Random Fields)
d. SVM (Support Vector Machines)
e. NN (Neural Networks)

Based on the text converted in operation S520 and the topic determined in operation S530, the entity recognizer 3222 may determine <corporate social responsibility>, <education>, <next generation innovator>, <research America (RA) >, <group 18>, <local high school AVID student>, <October 30>, <mountain view CA>, <AVID>, <internationally recognized program>, <underrepresented high school students>, <four-year colleges and universities>, <minority students>, <low-income students>, <first-generation college students>, and <students with special life circumstances> as the entities of the converted text.

Referring to FIG. 5B, the device 3000 may store the identified entities in an entity DB 3240 in a set $S_E$.

In operation S550, the device 3000 may determine a logical relationship between a pair of entities among the determined plurality of entities.

A standard binary relationship template DB 3250 $S_R$ may store standard binary relationship templates. The device 300 may fetch one or more relation templates $R_j$ related to an identified entity $E_i$ from the standard binary relationship template DB 3250 $S_R$. For example, the device 3000 may fetch binary relation templates such as "<entity> is a <definition>", "<entity> has <entity>", "<entity> is a part of <entity>", "<entity> is a member of <container>", "in <LOC>", "on <DATE-TIME>", and "<entity> is similar to <entity>" related to the entity <corporate social responsibility>.

The device 3000 may determine binary-relations between the entities $E_i$ based on relationship discovery criteria. The device 3000 may determine binary-relations between the entities $E_i$ using rule-based systems that typically look for specific patterns in the text that connect entities and the intervening words or using machine learning techniques that attempt to learn such patterns automatically from a training corpus.

The device 3000 may create a binary relationship of the form <$E_i$, $R_j$, $E_k$ > with respect to each entity $E_i$ in the entity DB 3240 $S_E$ and each relation template $R_j$ in the standard binary relationship template DB 3250 $S_R$. For example, the device 3000 may determine one of the entities in the entity DB 3240 $S_E$ as a value of a counterpart entity $E_k$ corresponding to each relation template <Ei, $R_j$, _>.

FIG. 5C illustrates that a particular entity may be related to a plurality of entities.

An entity 1 520 and an entity 3 510, the entity 1 520 and an entity 2 530, and the entity 3 510 and the entity 2 530 form binary relation pairs.

As shown in FIG. 5C, the device 3000 may form binary relationships between the entity 1 520, the entity 2 530, and the entity 3 510.

In operation S560, the device 3000 may generate a question about the user's speech based on the determined logical relation.

The device 3000 may generate a question about one entity based on a binary relationship between two entities. Specifically, the device 3000 may generate a why/what/when/how/who/where, etc. based question according to the relation template of the binary relationship. For example, when the relation template of the binary relationship is "<entity> is a <definition>", the device 3000 may generate a question about 'what'. Also, when the relation template of the binary relationship is "<entity> is in <location>", the device 3000 may generate a question about 'where'.

Referring back to FIG. 5C, the text/speech to Q/A 3223 may remove one entity from the binary relationship between two entities and may generate a question about the removed entity based on an entity that is not removed and the relation template.

Specifically, when the entity <Corporate Social Responsibility> and the entity <standard definition from web> form a binary relationship based on the relation template "<entity> is a <definition>", the text/speech to Q/A 3223 may generate a question "What is <entity>?", i.e., "What is <Corporate Social Responsibility>?" and may determine <standard definition from web> as an answer.

Question: What is Corporate Social Responsibility?

Answer: Corporate Social Responsibility is <standard definition from web>.

The text/speech to Q/A 3223 may retrieve the definition of "Corporate Social Responsibility" from an Internet search server and store the retrieved definition as an answer to the question "What is corporate social responsibility?"

In addition, when the entity <Corporate Social Responsibility> and the entity <Mountain View Campus> form a binary relationship based on the relationship template "<entity> is in <location>", the device 3000 may generate a question "Where was <entity> done? ", that is, "Where is <Corporate Social Responsibility> done?", and may determine the entity <Mountain View Campus> as an answer.

Question: Where is Corporate Social Responsibility done?

Answer: Corporate social responsibility is done in <Mountain View Campus>.

According to an embodiment of the disclosure, the device 3000 may generate a question-answer pair according to rule-based and learning-based approaches.

The device 3000 may store the generated question-answer pair in the QA DB 3238.

According to an embodiment of the disclosure, the device 3000 may generate a question based on only context. The context may determine the scope, coverage, and relevance of the question. The device 3000 may generate a question based on a "sentence context". The question formed based on the sentence context may be narrow in context. A question derived from "paragraph-context" may be broader in scope than that derived from sentence context. Questions generated from overall document context" may be generally broader in scope than those generated using the sentence or paragraph context.

The aforesaid type of context generates questions that are mostly pedagogical. The aforesaid type of context generates pointed or stereotype questions with an exact coverage of the context involved within the sentence, paragraph, document, etc. The automatically generated questions based on the context do not go beyond what has already been mentioned in the sentence, paragraph or document, and accordingly lack a lateral-thinking based approach.

For example, considering topics such as "Cricket World Cup", "ICC 2019 World Cup was played between 10 countries", mechanisms based on the context may generate objective and stereotype questions related to topics such as "How often a world cup takes place?", etc. Accordingly, the questions generated based on only the context may not be regarded as subjective or conceptual questions that are all but likely to be asked by the live audience. An example of a conceptual question may be: "How a decision referral system (DRS) is benefiting World cup cricket tournaments?"

Therefore, to generate subjective and conceptual questions, it is necessary to consider entities and topics in the text, and furthermore, generate a question by referring to other documents related to the topic.

In operation S580, the device 3000 may provide a virtual audience uttering the generated question.

FIG. 6 illustrates a method, performed by the device 3000, of storing a question-answer pair according to an embodiment of the disclosure.

The device 3000 may store the generated question-answer pair in the QA DB 3238. For example, the device 3000 may store 'Question: What is Corporate Social Responsibility?' and 'Answer: Corporate Social Responsibility is <standard definition from web>' in response to an entity <Corporate Social Responsibility> 610.

The device 3000 may store the question-answer pair in the form of one tuple in the QA DB 3238, and when a similarity score indicating a degree to which the question is related to a user's speech is calculated, may store the similarity score of the question-answer pair in the form of one triplet in the QA DB 3238.

Also, the device 3000 may store a relation template of binary relationship used to generate the question-answer pair together with the question-answer pair in relation to an entity. For example, the device 3000 may store the relation template of binary relationship "<entity> is <definition>" together with 'Question: What is Corporate Social Responsibility?' and 'Answer: Corporate Social Responsibility is <standard definition from web>' in response to the entity <Corporate Social Responsibility>.

When multiple question-answer pairs are generated with respect to one entity, the device 3000 may store the multiple question-answer pairs as a linked list in response to the entity. In this case, the device 3000 may connect triples in order of high similarity scores of questions.

The device 3000 may fetch the question-answer pair from the QA DEB 3238 based on the entity. For example, the device 3000 may determine an entity to question a user, and fetch the question-answer pair connected to the determined entity as a linked list from the QA DB 3238. Accordingly, during a live speech session, entities may be invoke/wake words for question selection. For example, as soon as an entity is mentioned in a speech session by the user, the device 3000 may fetch QA tuples/triplets indexed by the mentioned entity from the QA DB 3238. Also, the device 3000 may output a virtual audience uttering fetched questions.

The device 3000 may also store context such as local and global context that help in identifying entities together with the entity. Accordingly, the device 3000 may determine a current context based on context converted from the user's speech and match the determined context with the stored context, thereby fetching more context-aware questions during a question-fetch cycle.

FIG. 7 illustrates a method, performed by a device, of generating a question including an entity not included in a user's speech, according to an embodiment of the disclosure.

In operation S710, the device 3000 may receive a voice signal indicating the user's speech. In operation S720, the device 3000 may convert the received voice signal into text. In operation S730, the device 3000 may determine a topic for speech based on the converted text.

In operation S740, the device 3000 may receive a document related to the topic from a document DB based on the determined topic.

The document DB may be a database accessible by an Internet search engine, and may be a database that stores at least one document corresponding to one topic.

The device 3000 may receive the document related to the topic from the document DB by using the topic as a search word, a keyword, or a tag.

The device 3000 may determine the topic of the user's speech in FIG. 5 as 'corporate social responsibility and education'. Accordingly, the device 3000 may receive the following related document from the document DB based on 'corporate social responsibility and education'.

"Global companies are jumping into education to fulfill their social responsibilities as global citizens beyond their own country. Global companies are donating education as one of the solutions to solve social problems. Examples of educational donations from global companies include scholarship programs, vocational education programs for low-income people, and multicultural society adaptation programs."

In operation S750, the device 3000 may determine a plurality of entities included in the speech and a plurality of document entities included in the received document.

Specifically, the device 3000 may determine a plurality of first entities from text converted from the user's speech. For example, in operation S540 of FIG. 5, the device 3000 may determine <Corporate Social Responsibility>, <Education>, <Next Generation Innovators>, <Research America (SRA)>, <Group 18>, <Local High School AVID Students >, <October 30>, <Mountain View Campus>, <AVID, internationally Recognized Program>, <Ordinary High School Student>, <4-year University>, <Minority Students>, <Low-Income Students>, <First-generation college students> and <students with life special circumstances in their lives> as the plurality of first entities.

Also, the device 3000 may determine a plurality of second entities from the received document. For example, the device 3000 may determine <Global Companies>, <Global Citizen>, <Social Responsibility>, <Education>, <Solution to Solve Social Problems>, <Education Donation>, <Education Donation by Global Companies. >, <Scholarship Program>, <Education Program for Low-Income Classes>, and <Multicultural Society Adjustment Program> as the plurality of second entities.

In operation S760, the device 3000 may determine a logical relationship between a pair of entities among a plurality of entities included in the speech and a plurality of entities included in the received document. In operation S770, the device 3000 may generate a question about the user's speech based on the logical relationship.

Specifically, the device 3000 may determine a binary relationship between a pair of entities among the plurality of second entities included in the received document.

For example, the device 3000 may generate the binary relationship '<Scholarship Program> is an example of <educational donations of global companies>','<Educational program for low-income people> is an example of <educational donations of global companies>', and '<Multicultural Society Adaptation Program> is an example of <educational donations of global companies> based on an entity <Educational Donation Activities of Global Companies> and a relationship template '<Entity> is an example of <Entity>.

Also, the device 3000 may generate a question "What are the educational donations of global companies?" based on the binary relationship. Accordingly, the device 3000 may generate a question including the entity "educational donations of global companies" that is not included in the user's speech.

In addition, the device 3000 may determine <Scholarship Program>, <Education Program for Low Income Classes> and <Adaptation Program to Multicultural Society> as an answer to the question "What are educational donations of global companies?"

In addition, the device 3000 may determine a logical relationship between a pair of entities including one of the plurality of first entities included in the user's speech and one of the plurality of second entities included in the received document.

For example, the device 3000 may determine a binary relationship between an entity <AVID> among the plurality of first entities and an entity <educational donations of global companies> among the plurality of second entities as '<AVID> is similar to <educational donations of global companies>'.

Also, the device 3000 may generate a question "Is AVID similar to educational donations of global companies?" based on the binary relationship. Accordingly, the device 3000 may generate a question including the entity "educational donations of global companies" that is not included in the user's speech.

In addition, the device 3000 may determine 'similar' as an answer to the question "Is AVID similar to educational donations of global companies?"

Accordingly, the device 3000 may generate the question about the topic including the entity that is not included in the user's speech, based on the determined topic and the retrieved document.

In operation S780, the device 3000 may provide a virtual audience uttering the generated question.

FIGS. 8A to 8C illustrate a method, performed by the device 3000, of generating a question including an entity not included in a user's speech using a document DB according to an embodiment of the disclosure.

Referring to FIG. 8A, the device 3000 may generate a question based on not only an entity in the user's speech, but also a document related to the user's speech.

For example, the device 3000 may determine a topic of the user's speech, and receive a document related to the user's speech from the document DB 3260 based on the determined topic.

The document DB 3260 may be a database accessible by an Internet search engine. In this case, the device 3000 may transmit the topic as a search word to an Internet search engine server and receive web addresses of documents retrieved by the topic from the Internet search engine server. The device 3000 may receive documents retrieved by the topic from the document DB 3260 based on the received web addresses.

Also, the document DB 3260 may be a database that stores at least one document corresponding to one topic. In this case, the device 3000 may fetch at least one document stored in correspondence with the topic from the document DB 3260.

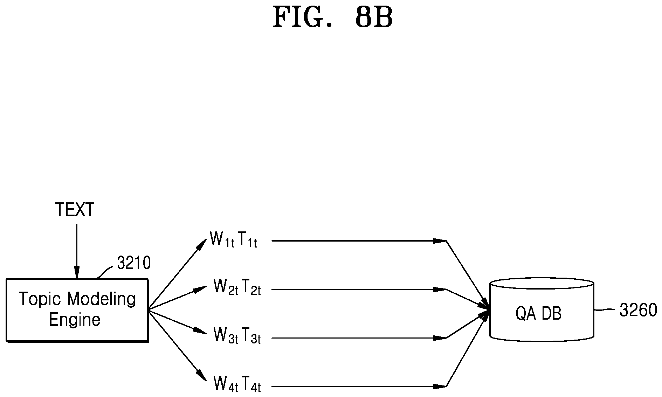

Referring to FIG. 8B, the device 3000 may determine a plurality of topics and weights with respect to the plurality of topics based on text converted from the user's speech. Accordingly, the device 3000 may acquire a plurality of related documents based on the plurality of topics.

According to another embodiment of the disclosure, the device 3000 may receive a document from the document DB 3260 based on a context along with the topic. For example, as the user starts a speech, the device 3000 may determine not only the topic of the speech, but also the context of the speech, based on the converted text. The device 3000 may receive a document stored in correspondence with the determined topic and context from the document DB.

The context may be used locally or globally. Local context may help with performing tasks like entity recognition better (e.g. identify entities in the form of a sequence). The other type of context "Global context" helps assists performing tasks like choosing the subset of entities out of the entire stored entities, looking for relations that match known concepts in a topic, etc. In other words, the global context helps in identifying semantically related entities than syntactically related entities

The device 3000 may determine a logical relationship between a pair of entities among a plurality of entities included in the speech and a plurality of document entities included in the received document, and, based on the determined logical relationship, generate a question about the user's speech.

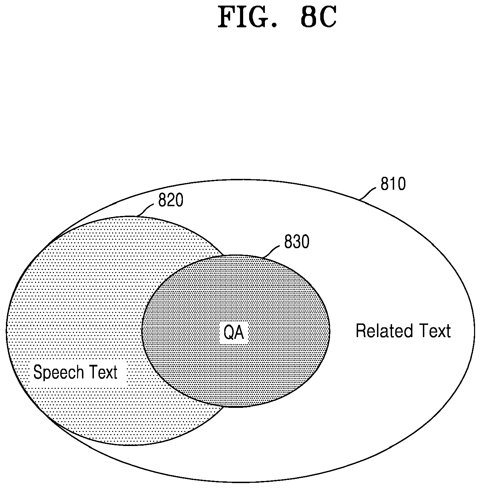

As shown in FIG. 8C, the device 3000 may generate a question 820 located in an 'intersection' area between a "speech text" (i.e., converted text or delivered content 820) and a "related text" (related document 810). Accordingly, the generated QA pair is not limited to the user's speech and may be rather exploratory questions and questions according to a lateral thinking-based approach.

FIGS. 9A and 9B illustrate a method, performed by the device 3000, of generating a question based on a document input by a user according to an embodiment of the disclosure.

Referring to FIG. 9A, the device 3000 may generate the question in consideration of a document input by the user. The device 3000 may receive a user input for inputting a document through a user input device 3620.

For example, upon receiving a user input for entering a URL, the device 3000 may receive a document from a database accessed by the URL based on the input URL and determine the received document as a document input by the user. Also, the device 3000 may receive a user input for directly inputting a document file.

The device 3000 may determine a plurality of entities included in a document input by a user, and determine a logical relationship between a pair of entities among a plurality of entities included in the speech and a plurality of entities included in the input document. The device 3000 may generate a question based on the determined logical relationship.

Because it is highly possible for the user to own a document related to his or her speech, the device 3000 may generate questions that are more relevant to the user's speech based on the document input by the user.

The device 3000 may determine a plurality of first entities in the text converted from the user's speech, and determine a plurality of third entities in the document input by the user. The device 3000 may determine a binary relationship between a pair of entities among a plurality of third entities included in the document input by the user, and generate a question based on the determined binary relationship. In addition, the device 3000 may determine a binary relationship between a pair of entities including one of the plurality of first entities and one of the plurality of third entities, and generate a question based on the determined binary relationship. A method of generating a question based on the plurality of first entities and the plurality of third entities will be understood with reference to the method of generating a question based on the plurality of first entities and the plurality of second entities described with reference to FIG. 7.

Referring to FIG. 9B, the device 3000 may provide a user menu 910 for inputting the document. For example, the user menu for inputting the document may include items such as 'expected question direct input' 920, a 'URL' 930, and a 'file' 940.

In response to receiving a user input for selecting the item "expected question direct input" 920, the device 3000 may provide a menu for directly inputting the question. Upon receiving the user input for inputting the question to be uttered by a virtual audience during a speech, the device 3000 may provide the virtual audience uttering the input question when content of the question input during the user's speech is detected.

For example, the device 3000 may determine a trigger text among texts constituting a question input by the user, and provide the virtual audience uttering the input question when the trigger text is detected from the converted text. The device 3000 may determine the trigger text based on the entity included in the question input by the user or the topic of the question.

Upon receiving the user input for selecting the items 'URL' 930 and 'file' 940, the device 3000 may determine the received file as the document input by the user.

FIG. 10 illustrates a method, performed by the device 3000, of outputting a question selected by a user from among a plurality of questions according to an embodiment of the disclosure.

In operation S1010, the device 3000 may receive a voice signal indicating a user's speech. In operation S1020, the device 3000 may convert the received voice signal into text.

In operation S1030, the device 3000 may generate a plurality of questions with respect to the user's speech based on the converted text.

For example, referring to FIG. 6, the device 3000 may generate a plurality of questions respectively corresponding to a plurality of entities.

Also, as the user's speech proceeds, the device 1000 may detect a new entity from the converted text, and may generate a plurality of questions by generating a question based on the new entity.

In addition, as the user's speech proceeds, a topic of the speech may be changed, and as the topic is changed, the device 1000 may generate a plurality of questions by generating a question with respect to the changed topic.

In operation S1040, the device 3000 may receive a user input for selecting one of the plurality of questions.

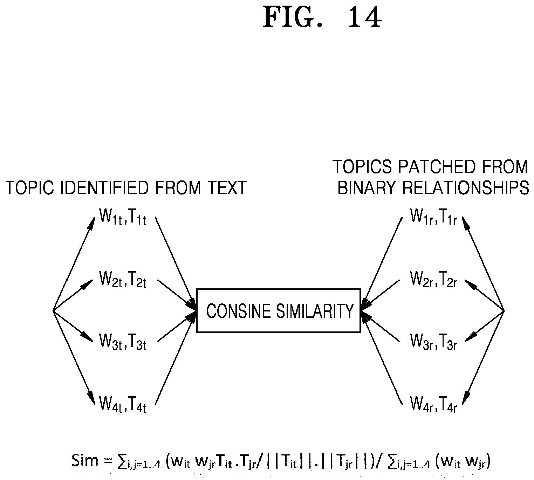

As the question is generated, the device 3000 may display the generated question in real time. Also, the device 3000 may determine a degree to which the question is related to the user's speech, and display the questions in order of high relevance to the user's speech. A method of calculating the degree to which the question is related to the user's speech will be described later with reference to FIG. 14.

Also, the device 3000 may display a question directly input by a user. For example, as a trigger text of the question input in the text is detected, the device 3000 may display the question input by the user in real time.

As the user delivers a speech, the device 3000 may change displayed questions in real time.

The device 3000 may receive a user input for selecting one of a plurality of displayed questions. For example, the device 3000 may receive the user input for selecting one of the plurality of questions through a mouse or a touch pad. Also, the device 3000 may receive a user input for selecting a previous question or a next question according to the order in which questions are displayed through a TV remote controller, a VR remote controller, a VR controller, or a presentation remote control.

In operation S1050, the device 3000 may provide a virtual audience uttering the selected question.

According to an embodiment, the device 3000 may store a selected question corresponding to a topic. Thereafter, when the same topic is detected from the user's speech, the device 3000 may preferentially provide the stored question in correspondence with the topic, thereby continuously providing the same question during several rehearsals.

FIG. 11 illustrates a method, performed by the device 3000, of providing a menu for selecting one of a plurality of questions according to an embodiment of the disclosure.

Referring to FIG. 11, the device 3000 may display a plurality of questions 1110, 1120, and 1130 on a screen. As a user's speech proceeds, the device 3000 may display a generated question or a question input by a user on the screen.

The device 3000 may sequentially display questions according to the order in which the questions are generated. In addition, the device 3000 may display questions in order of high relevance to the user's speech. In addition, the device 3000 may display questions in order of high relevance to a question selected by the user.

The device 3000 may provide a virtual audience uttering the selected question.

FIG. 12 illustrates a method, performed the device 3000, of determining timing to utter a question, according to an embodiment of the disclosure.

Referring to 1210 of FIG. 12, the device 3000 may detect a previously determined trigger text in a converted text and, when the trigger text is detected, may output a virtual audience uttering the question.

The trigger text may be, for example, "Question", "Do you have a question?" or "Do you have any questions?", but is not limited thereto.

For example, as a voice signal of the user "Do you have a question?" is received, the device 3000 may detect a trigger text "Do you have a question" in the converted text. Upon detecting the trigger text, the device 3000 may output the virtual audience uttering the question.

Referring to 1220 of FIG. 12, the device 3000 may calculate a time during which a voice signal is not continuously received, and output the virtual audience uttering the question as the calculated time exceeds a previously determined threshold time.

As the user's speech is stopped, the device 3000 may calculate the time during which the voice signal is not continuously received, and output the virtual audience uttering the question as the calculated time exceeds the previously determined threshold time. The threshold time may be, for example, 7 seconds. As the calculated time exceeds the previously determined threshold time, the device 3000 may output the virtual audience uttering the question.

FIG. 13 illustrates a method, performed by the device 3000, of selecting a virtual audience uttering a question based on a difficulty level of a question, according to an embodiment of the disclosure.

In operation S1310, the device 3000 may receive a voice signal indicating a user's speech. In operation S1320, the device 3000 may convert the received voice signal into text. In operation S1330, the device 3000 may generate a question for a speech based on the converted text.

In operation S1340, the device 3000 may determine the difficulty level of the generated question.

The device 3000 may determine a binary relationship of a question from the generated question, and may determine topics of the question from the determined binary relationship. As the topics of the question are determined, the device 3000 may determine a cosine similarity between the topics detected from the user's speech and the topics of the question, and determine the difficulty of the question based on the determined cosine similarity.

The cosine similarity between two vectors may mean a degree to which the two vectors are similar, and a larger cosine similarity value may mean that the generated question is related to the user's speech. Therefore, the device 3000 may determine a high difficulty level of the generated question as the cosine similarity value increases. A method of determining the difficulty level of a question will be described later with reference to FIG. 14.

In operation S1350, the device 3000 may determine a profile corresponding to the determined difficulty level, and provide the virtual audience so that the virtual audience corresponding to the determined profile utters the question.

The difficulty level of the question may be determined as one of easy, medium and difficult. In addition, the profile of the virtual audience may include an experienced level item. The experienced level may be determined by amateurs, middle managers and experts. Accordingly, the device 3000 may determine the profile corresponding to the difficulty level of the question. For example, when the difficulty level of the question is easy, the device 3000 may determine the profile corresponding to the question as an amateur, and output the virtual audience so that a virtual audience member whose experienced level is the amateur utters the question.

FIG. 14 illustrates a method, performed by the device 3000, of determining a difficulty level of a question according to an embodiment of the disclosure.

Referring to FIG. 14, the device 3000 may determine the difficulty level of the question based on a cosine similarity indicating a relationship between the question and a text.

Specifically, the device 3000 may obtain a plurality of topics from the text in descending order of probability (i.e., weight) that the topic is correct. For example, the device 3000 may extract topics $T_{1t}$, $T_{2t}$, $T_{3t}$ and $T_{4t}$ from the text, and determine weights $w_{1t}$, $w_{2t}$, $w_{3t}$ and $w_{4t}$ respectively corresponding to the topics $T_{1t}$, $T_{2t}$, $T_{3t}$ and $T_{4t}$. The device 3000 may rank the topics $T_{1t}$, $T_{2t}$, $T_{3t}$ and $T_{4t}$ identified from the text in descending order (e.g., $w_{1t}T_{1t}$, $w_{2t}T_{2t}$, $w_{3t}T_{3t}$ and $w_{4t}T_{4t}$) of the weights $w_{1t}$, $w_{2t}$, $w_{3t}$ and $w_{4t}$.

Also, the device 3000 may determine binary relationships with respect to the question and detect topics from the determined binary relationships. The device 3000 may obtain the topics from the binary relationships in descending order of probability that the detected topic is correct. For example, the device 3000 may extract topics $T_{1r}$, $T_{2r}$, $T_{3r}$ and $T_{4r}$ from the binary relationships, and determine weights $w_{1r}$, $w_{2r}$, $w_{3r}$ and $w_{4r}$ respectively corresponding to the topics $T_{1r}$, $T_{2r}$, $T_{3r}$ and $T_{4r}$. The device 3000 may rank the topics $T_{1r}$, $T_{2r}$, $T_{3r}$ and $T_{4r}$ identified from the question in descending order (e.g., $w_{1r}T_{1r}$, $w_{2r}T_{2r}$, $w_{3r}T_{3r}$ and $w_{4r}T_{4r}$) of the weights $w_{1r}$, $w_{2r}$, $w_{3r}$ and $w_{4r}$.

As shown in FIG. 14, the device 3000 may calculate a similarity or a degree of alignment between the text and the question in the following order.

(Step a): The device 3000 may access topics of the user's speech stored in a topic DB. For example, the device 3000 may select the top four topics $T_{1t}$, $T_{2t}$, $T_{3t}$ and $T_{4t}$ having the weights $w_{1t}$, $w_{2t}$, $w_{3t}$ and $w_{4t}$.

(Step b): The device 3000 may extract a topic with respect to the binary relationship of the question. For example, the device 3000 may select the top four topics $T_{1r}$, $T_{2r}$, T3r and T4r having the weights $w_{1r}$, $w_{2r}$, $w_{3r}$ and $w_{4r}$.

(Step c): The device 3000 may obtain a weighted cosine similarity of a topic set of the user speech and a topic set with respect to the binary relationship of the question. The device 3000 may determine the similarity by measuring the cosine of an angle between two vectors (the topic set from the user's speech and the topic set from the binary relationship of the question) projected onto a multidimensional space. The smaller the angle, the higher the cosine similarity.

The weighted cosine similarity Sim may be calculated as follows.

$$\mathrm{Sim} = \sum_{i,j=1..4} (w_{it}\, w_{jr}\, T_{it} \cdot T_{jr} / \mid\mid T_{it} \mid\mid . \mid\mid T_{jr} \mid\mid) / \sum_{i,j=1..4} (w_{it}\, w_{jr})$$

An example of calculating the cosine similarity of the text given in operation S510 of FIG. 5A and the question "What is corporate social responsibility?" is as follows.

The device 3000 may determine a topic (having a weight greater than or equal to a threshold value) with respect to the given text in operation S510 of FIG. 5A as follows.

1. Corporate Social Responsibility in Research America (RA) ($T_{1t}$ and $w_{1t}$)
2. AVID students at Research America (RA) ($T_{2t}$ and $w_{2t}$)

In addition, in relation to the question "What is corporate social responsibility?", the device 3000 may determine a binary relationship underlying the question as "Corporate social responsibility is <standard definition of the web>", and, based on the determined binary relationship, may determine the topic (the weight is higher than the threshold value) underlying the question as "Corporate social responsibility ($T_{1r}$ and $w_{1r}$)".

Accordingly, the device 3000 may calculate the cosine similarity Sim between the topics $w_{1t}T_{1t}$ and $w_{2t}T_{2t}$ identified from the text and the topic $w_{1r}T_{1r}$ of the question.

Because the correlation between the question and the text increases as the text and the question are similar, the device 3000 may determine a high difficulty level of the question as a weighted cosine similarity value increases. Categories of difficulty level of the question may be easy, difficult or moderate, and may be high, medium or low.

The device 3000 may generally determine the difficulty level of the question "Do you provide examples of CSR-related activities in other regions?" based on the cosine similarity. In addition, the device 3000 may determine the difficulty level of the question "Do you have any data to prove the success of the CSR program?" as difficulty.

The weighted cosine similarity may mean a correlation between main thematic clusters of a user's speech and a binary relationship of a question. The cosine similarity may further emphasize semantic similarity compared to syntactic-similarity.

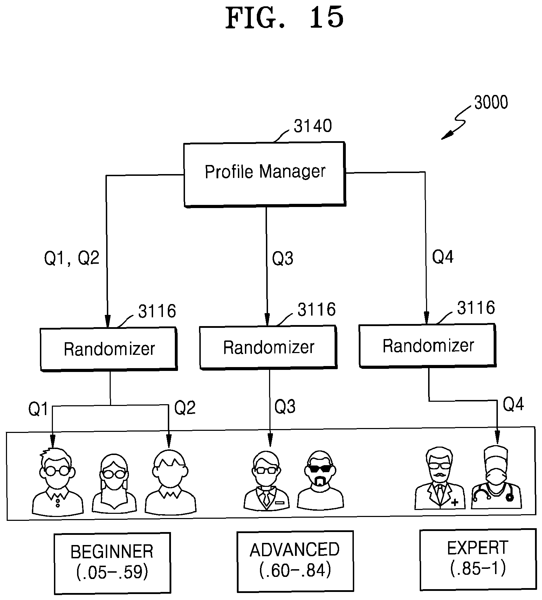

FIG. 15 illustrates a method, performed by the device 3000, of mapping a question to a virtual audience according to a difficulty level of the question according to an embodiment of the disclosure.

Referring to FIG. 15, a profile manager 3140 may map the question to a virtual audience member having a profile that matches the difficulty level of the question. The profile of the virtual audience may include an experienced level item. Values of the experience level item may be amateur (less experience), middle-rung (more experience), and top-rung (expert).

The profile manager 3140 may map easily graded questions (i.e. merely querying a definition of anything) to virtual audience members with less experienced or amateur in the field. In addition, the profile manager 3140 may map questions aligned with the converted text (i.e. high topic similarity and accordingly moderately graded) to virtual audience members with moderate to high level of expertise. Questions with high cosine similarity may be partly objective and partly conceptual. The profile manager 3140 may map subjective and conceptual questions (i.e. related to text but low on similarity and thereby graded as difficult) to virtual audience members with expert profiles.

The device 3000 may generate the following questions from the text "Cricket World Cup" and "ICC 2019 World Cup was held in 10 countries".

Q1. When was FIFA formed?

Q2. When did the first FIFA World Cup played?

Q3. Which other game played globally?

Q4. Which teams are going to play world cup 2022?

As shown in Table 2, the profile manager 3140 may map questions Q1 to Q4 and profiles (beginner, advanced, and expert) based on the difficulty level of the question. For example, the device 3000 determines a cosine similarity value of the question 0.55 as 0.55, determine the category of the question as easy or objective based on the cosine similarity value of the question, and map the question to a virtual audience member having the beginner profile.

**[Table 2]**

| Questions | Difficulty Level (Cosine Similarity) | Category | Profile |
|-----------|--------------------------------------|----------|---------|
| Q1 | (.55) | Easy or Objective | Beginner |
| Q2 | (.59) | Easy or Objective | Beginner |
| Q3 | (.83) | Medium (Partly easy and partly conceptual) | Advanced |
| Q4 | (.94) | Hard or conceptual | Expert |

A randomizer 3116 may randomly map questions to virtual audience members having the same level of experience profile.

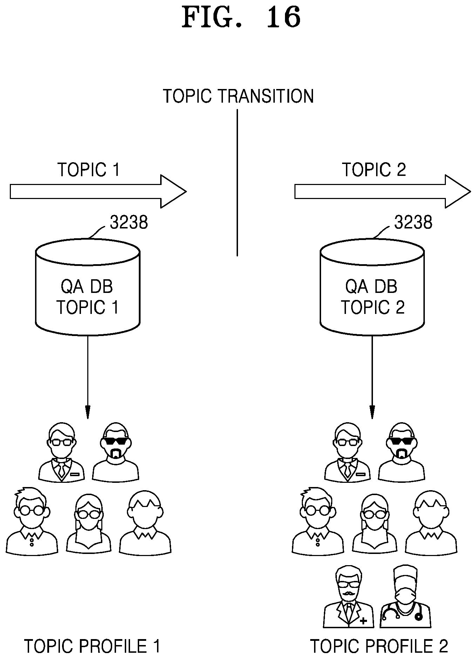

FIG. 16 illustrates a method, performed by the device 3000, of changing a virtual audience according to a topic of a user's speech, according to an embodiment of the disclosure.

The device 3000 may track the topic of the user's speech, and may transit the topic from one topic to another topic at an arbitrary time as the user's speech proceeds. As the topic is transited, the device 3000 may fetch a question related to the transited topic from the QA DB 3238 based on the transited topic. As the question related to the topic is fetched, the device 3000 may change members of the virtual audience based on a difficulty level of the fetched question.

For example, the topic may be transited from a general male-interest topic to a female interest topic, from one age-band to another, from one sports domain to music domain, etc.

Referring to FIG. 16, as the topic of the user's speech is changed from topic 1 to topic 2, the device 3000 may fetch a question with respect to the topic 2 from the QA DB 3238 and change a question with respect to the topic 1 to the fetched question. The device 3000 may determine a difficulty level of the question with respect to the topic 2 and change the virtual audience to a virtual audience member having a profile (audience profile 2) of the determined difficulty level.

FIG. 17 illustrates a method, performed by the device 3000, of validating a user's answer to a question uttered by a virtual audience according to an embodiment of the disclosure.

The device 3000 may calculate a score with respect to the user's answer. In addition, the device 3000 may control gesture and reaction of the virtual audience in response to the user's answer.

Referring to FIG. 17, the device 3000 may receive the user's answer to the question. For example, the device 3000 may determine a voice signal of the user received immediately after outputting the question as the user's answer. A speech to text (S2T) module 3105 may convert the voice signal received as the user's answer to the question into text. A validator 3152 in the validator module 3150 may receive the converted text as input.

The device 3000 may previously determine an expected answer to the output question, and calculate the score with respect to the user's answer based on a similarity between the determined expected answer and the received answer. For example, the validator 3152 may calculate a correlation between the received answer and the expected answer using natural language processing technology, and calculate a score with respect to the received answer based on the calculated correlation. Also, the device 3000 may display the calculated score.

In addition, the validator 3152 may capture a user's behavior while the user delivers the answer, calculate a correlation between the captured user's behavior and an expected behavior, and based on the calculated correlation, score the received response.

The validator 3152 may display the score as an instant score, aggregate the score with existing scores, and generate a final report based on the total score after the session has ended.

Also, the device 3000 may output response information of the virtual audience to the user's answer. The response information of the virtual audience is information indicating whether the received answer is similar to the expected answer, and may be expressed as an expression, gesture, or voice of the virtual audience, but is not limited thereto.

An animation controller 3162 in the simulation module 3160 may determine a gesture or behavior of the virtual audience based on a score based gesture look-up-table. In addition, the animation controller 3162 may provide real-time feedback to the user by modeling the virtual audience based on the determined gesture or behavior of the virtual audience.

For example, the animation controller 3162 may control an animated character of the virtual audience to express a satisfactory expression or gesture with respect to a satisfactory answer having a high summed score, while controlling the animated character of the virtual audience to express an unsatisfactory expression or gesture with respect to an unsatisfactory answer having a low summed score.

In addition, the device 3000 may provide real-time feedback to the user by uttering a follow-up question with respect to the user's answer. The device 3000 may simulate the response of the virtual audience through voice modulation, emotions, and rating, etc.

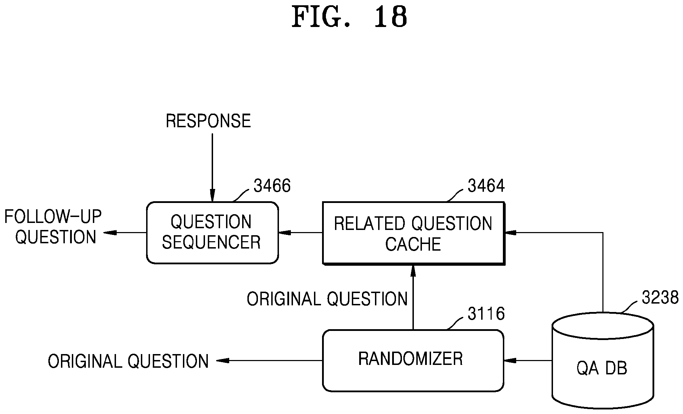

FIG. 18 illustrates a method, performed by the device 3000, of providing a response of a virtual audience to a user's answer through a follow-up question according to an embodiment of the disclosure.

The device 3000 may fetch the follow-up question with respect to the user's answer from a QA DB 3238.

As illustrated in FIG. 6, when generating a question-answer, the device 3000 may store several question-answer pairs corresponding to a specific entity. When fetching one of the stored question-answer pairs for mapping to the virtual audience, the device 3000 may fetch other questions tied to the same entity as related questions.

The randomizer 3116 may store related questions fetched for a quick access in a related question cache 3463.

A question sequencer 3466 may determine the utterance order of a plurality of questions stored in a related question cache 3463.

The device 3000 may render the virtual audience so that the cached related question is uttered as a follow-up question.

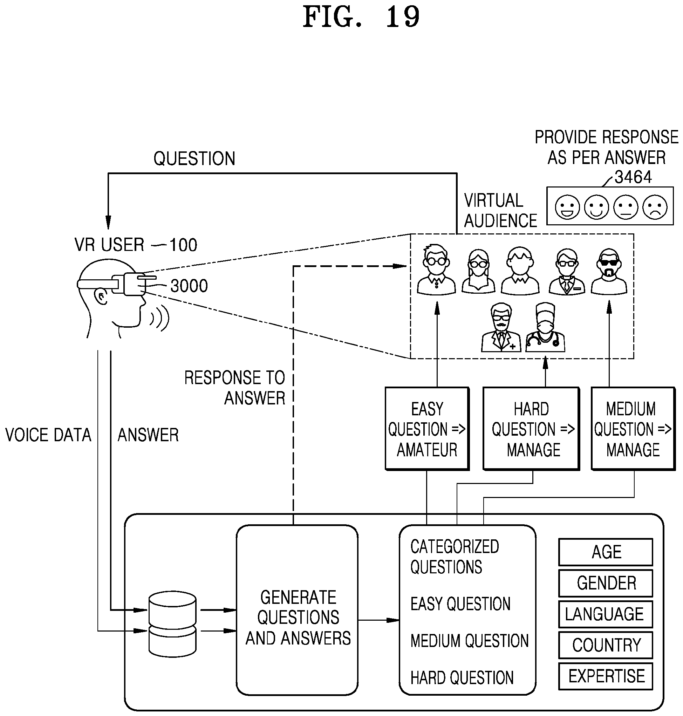

FIG. 19 illustrates a method, performed by the device 3000, of displaying simulated-visuals of a virtual audience, according to an embodiment of the disclosure.

The device 3000 may generate or fetch the following question and answer based on a converted text.

Question: What is Corporate Social Responsibility?

Answer: Corporate Social Responsibility is <definition>

The device 3000 may determine a difficulty level of the generated question, and select a virtual audience member to utter the question based on the determined difficulty level and a profile of the virtual audience.

The device 3000 may display the virtual audience with profiles of amateurs, people who have worked in the field for a long time, and experts. In addition, the device 3000 may display the virtual audience having profiles of a blue collar professional, a middle-rung white collar professional and a veteran/emeritus as animated characters.

When the users utters a sentence 'Corporate Social Responsibility (CSR) is a big responsibility', the device 3000 may generate a question-answer set or fetch the question-answer set from the QA DB 3238 based on the entity <CSR>. As the user takes a pause or gazes at audience to indicatively expect a question, the device 3000 may output the virtual audience such that the question is uttered.

The device 3000 may render an animated character and output sound so that the question is uttered by the animated character (for example, a blue collar professional in respect of "easy" question) based on the difficulty level of the question and the profile of the virtual audience member. As the user answers the question, the device 3000 may store an answer corresponding to the uttered question in a cache to validate the user's answer.

The device 3000 may render the behavior of the virtual audience according to the profile of the virtual audience member. For example, the device 3000 may render the behavior, language, or gesture from the amateur to be informal or friendly. In contrast, the device 3000 may render the middle rung and the behavior, language, or gesture of expert characters to be more formal. The device 3000 may render the attire of the animated character according to the profile.

In addition, irrespective of the competency level, the behavior of animated characters may also differ from each other based on ethnicity, origin, age, gender, language, country, and attire, and thus the device 3000 may define a diversity of personalities and behavior according to the profile of the virtual audience member.

Referring to FIG. 19, as the user answers the question, the device 3000 may convert the answer into text and compare the converted text with the answer cached from the QA DB 3238.

Also, the device 3000 may evaluate a captured users' image and a recorded users' voice while the user delivers the answer to the question.

The device 3000 may express emotions of the virtual audience in a previously determined manner based on the accuracy of the answer provided by the user, the extent to which the question has been answered by the user, and the profile of the virtual audience member. For example, when the answer provided by the user is similar to the answer cached in the database by more than a previously determined level, the device 3000 may render the virtual audience member who asked the question to rejoice. In addition, the device 3000 may render a virtual audience member having the amateur profile to make indifferent expressions and gestures regardless of the accuracy of the answer provided by the user or the extent to which the question has been answered. In addition, the device 3000 may render the virtual audience to make disappointed expressions and gestures when the extent to which the question has been answered by the user is insufficient. In another embodiment of the disclosure, the device 3000 may display a smile 3464 in various forms to clearly manifest the expression or emotion of the virtual audience member.

The device 3000 may provide the virtual audience for a public speaking rehearsal, as well as the virtual audience for a) mass recruitment and interview process, b) a counselling session, c) a singing-audition process wherein singers may use to prepare for singing audition or stage performance in front of the virtual audience, and d) a virtual press conference wherein public figures such as celebrities, political-leaders, sportsmen, actors, etc., rehearse against the virtual audience.

The device 3000 may be envisaged as a form of an interactive computing system such as a VR device or an AR device for executing semantic-analysis of content delivered by the user. Therefore, the VR or AR device may be worn by the real-life user. The VR/AR device may sense the content delivered by the user and thereafter render a simulated-environment or AR environment including a simulated diversity of audience. The device 3000 may send the question to be uttered by the virtual audience to the real-life user.

FIG. 20 illustrates a method of controlling a device to distribute questions and a virtual audience to utter the questions according to an embodiment of the disclosure.

FIG. 20 illustrates an interplay among a Q/A Generator 3220, a relevance manager 3230 and a simulation manager 3110.

A scheduler 3342 may send a 'question release' signal to the QA DB 3238 in the relevance manager 3230. The scheduler 3342 may send the'question release' according to signal time-based (after a specific time interval) or event based (e.g.: at the end of a specific number of sentences). The scheduler 3342 may handle the interactivity between a speaker and the simulated audience by triggering a question after specific time-interval or the event. For example, the event may one of the following:

o sentences exceeding a pre-set threshold within the delivered content;
o detection of an indication such as a wake-up word within the content;
o detection of one or more gestures from the orator; and
o an opportunity of queries raised by the orator.

When there are questions available in the QA DB 3238, a randomizer 3116 may fetch a question from the QA DB 3238.

A categorizer 3233 may categorize the fetched question based on difficulty and hardness (based on cosine similarity)

A question mapper 319 may map the categorized question to an appropriate profile through a profile manager 3140 managing diverse profiles of simulated characters. The profile manager 3140 may generate a pair of synchronized triggers. The profile manager 3140 may send a first trigger to the audience generator 3170 to pick an appropriate animated character. Also, the profile manager 3140 may send a second trigger to the animation controller 3162 to superpose a behaviour (such as voice and gesture) in accordance with the profile.

In case of the presence of a plurality of animated characters pertaining to the same profile, the profile randomizer 3116 may randomly choose a character for ease of selection. The profile manager 3140, the animation controller 3162, and the profile randomizer 3116 may together constitute a simulator module.

The question mapper 3119 may send a corresponding answer linked with the fetched question to the validator 3152 for validation upon receipt of a user's response.

The animation controller 3162 may render gestures, facial expressions, and clothes of a virtual audience member based on the profile of the selected virtual audience member, and modulate the received question based on the voice modulation profile. The animation controller 3162 may display the rendered virtual audience member and output the modulated voice using the T2S 3105.

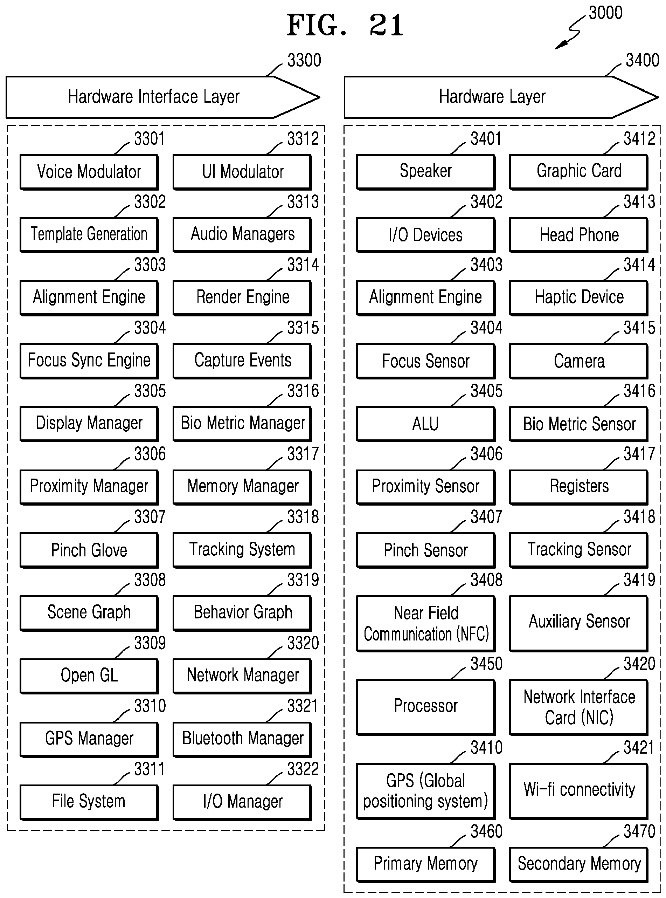

FIG. 21 is a block diagram of the device 3000 providing a virtual audience according to an embodiment of the disclosure.

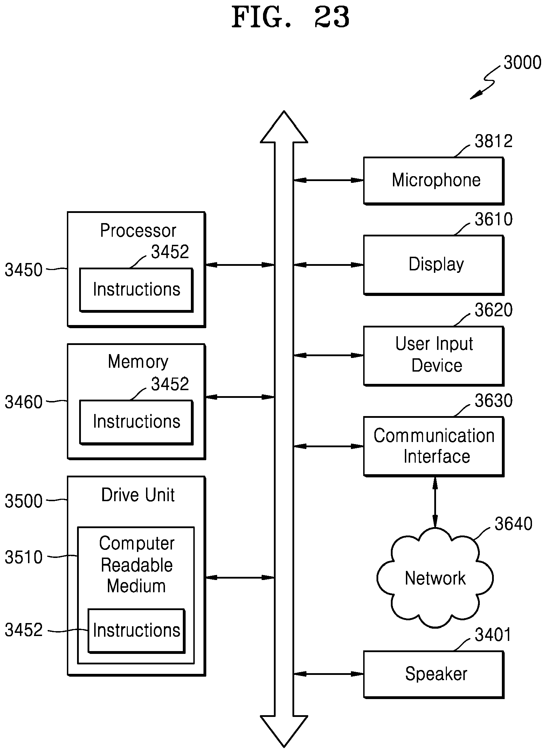

FIG. 21 is merely a non-limiting example, and it will be appreciated that many other architectures may be implemented to facilitate the functionality described herein. The architecture may be executing on hardware such as a computing machine of FIG. 23 that includes, among other things, processors, memory, and various application specific hardware components.

A representative hardware interface layer 3300 may include one or more processing units having associated executable instructions. Such executable instructions represent the executable instructions of a processing layer 3200 and an application layer 3100. The hardware interface layer 3300 may represent an abstraction layer among the hardware layer 3400, on one hand, the application layer 3100 and the processing layer 3200 on another hand.

The hardware interface layer 3300 may provide a device driver interface allowing a program to communicate with the hardware.

The device 3000 may include an operating-system, libraries, frameworks or middleware. The operating system may manage hardware resources and provide common services. The operating system may include, for example, a kernel, services, and drivers defining the hardware interface layer 3300.

The drivers may be responsible for controlling or interfacing with the underlying hardware. For example, the drivers may include a display drivers, camera drivers, Bluetooth® drivers, flash memory drivers, serial communication drivers (e.g., Universal Serial Bus (USB) drivers), Wi-Fi® drivers, audio drivers, power management drivers, etc. depending on the hardware configuration.

The hardware interface layer 3300 may further include libraries which may include system libraries such as file-system (e.g., C standard library) that may provide functions such as memory allocation functions, string manipulation functions, mathematic functions, and the like. In addition, the libraries may include API libraries such asaudio-visual media libraries (e.g., multimedia data libraries to support presentation and manipulation of various media format such as MPEG4, H.264, MP3, AAC, AMR, JPG, PNG), graphics libraries (e.g., an OpenGL framework that may be used to render 2D and 3D graphic content on a display), database libraries (e.g., SQLite that may provide various relational database functions), web libraries (e.g. WebKit that may provide web browsing functionality), and the like.

A middleware may provide a higher-level common infrastructure such as various graphic user interface (GUI) functions, high-level resource management, high-level location services, etc. The middleware may provide a broad spectrum of other APIs that may be utilized by the applications or other software components/modules, some of which may be specific to a particular operating system or platform.

Examples of VR device specific drivers and libraries forming a part of the hardware interface layer 3300 may include Voice modulator 3301, a UI modulator 3312, a template generation 3302, audio managers 3313, an alignment engine 3303, a render engine 3314, a focus sync engine 3304, capture events 3315, a display manager 3305, a bio metric manager 3316, a proximity manager 3306, a memory manager 3317, a pinch glove 3307, a tracking system 3318, a scene graph 3308, a behavior graph 3319, open GL 3309, a network manager 3320, a GPS manager 3310, a Bluetooth manager 3321, a file system 3311, an I/O manager 3322, etc.

Examples of VR device specific hardware components within the hardware layer 3400 may include a speaker 3401, I/O devices 3402, an alignment sensor 3403, a focus sensor 3404, an ALU 3405, a proximity sensor 3406, a pinch sensor 3407, a near field communication (NFC) 3408, a processor 3450, a GPS (Global positioning system) 3410, a primary memory 3460, a graphic card 3412, a head phone 3413, a haptic device 3414, a camera 3415, a bio metric sensor 3416, registers 3417, a tracking sensor 3418, an auxiliary sensor 3419, a network interface card (NIC) 3420, Wi-Fi connectivity 3421, and a secondary memory 3470.

The primary memory 3460 may include, for example, at least one of volatile memory (e.g., DRAM (Dynamic RAM), SRAM (Static RAM), SDRAM (Synchronous DRAM), etc.) or non-volatile memory (e.g., OTPROM (One Time Programmable ROM), PROM (Programmable ROM), EPROM (Erasable and Programmable ROM), EEPROM (Electrically Erasable and Programmable ROM), mask ROM, flash ROM, NAND flash memory, NOR flash memory, etc.)

According to an embodiment of the disclosure, the primary memory 3460 may have the form of an SSD (Solid State Drive). The second memory 3470 may include a flash drive, e.g., CF (Compact Flash), SD (Secure Digital), Micro-SD (Micro Secure Digital), Mini-SD (Mini Secure Digital), xD (eXtreme Digital), memory stick, or the like. The secondary memory 3470 may be an external memory that may be functionally connected to the device 3000 through various interfaces. According to an embodiment of the disclosure, the device 3000 may further include a storage device or medium such as a hard drive.

Each of the above-discussed elements of the VR device 3000 disclosed herein may be formed of one or more components, and its name may be varied according to the type of the electronic device. The VR device 3000 disclosed herein may be formed of at least one of the above-discussed elements without some elements or with additional other elements. Some of the elements may be integrated into a single entity that still performs the same functions as those of such elements before integrated.

The term "module" used herein may refer to a certain unit that includes one of hardware, software and firmware or any combination thereof. The module may be interchangeably used with unit, logic, logical block, component, or circuit, for example. The module may be the minimum unit, or part thereof, which performs one or more particular functions. The module may be formed mechanically or electronically. For example, the module disclosed herein may include at least one of ASIC (Application-Specific Integrated Circuit) chip, FPGAs (Field-Programmable Gate Arrays), and programmable-logic device, which have been known or are to be developed.

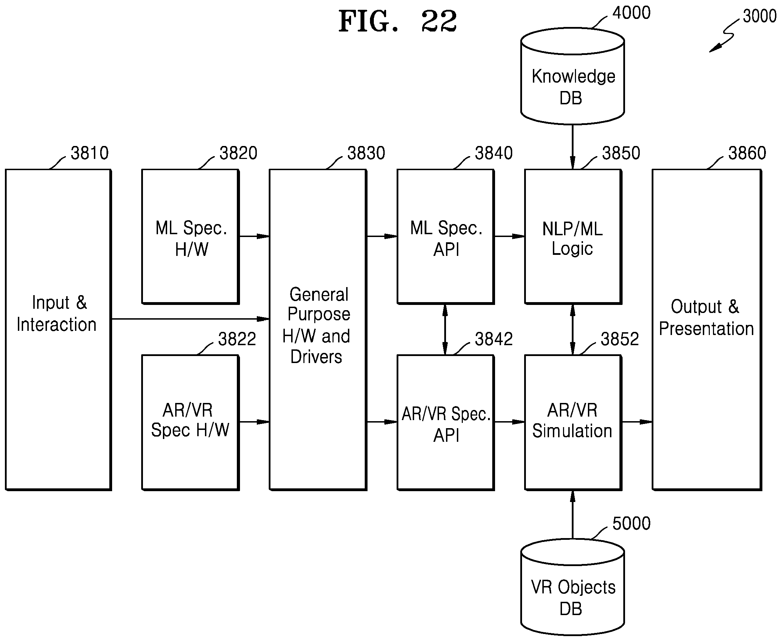

FIG. 22 illustrates an example architecture depicting an aggregation of AR/VR based mechanisms and ML/NLP based mechanism according to an embodiment of the disclosure.

An application layer 3100 and associated modules may be executed AR/VR based mechanisms. A processing layer 3200 and the associated sub-modules may be executed through ML/NLP based mechanisms.

A user-interface defined as an input and interaction 3810 may refer overall input. The input & interaction 3810 may include one or more of mouse, keyboard, touch screen, game pad, joystick, microphone, camera, etc. A ML(Machine Learning) Spec. H/W 3820 may correspond to the hardware layer 3400 and depict specialized hardware for ML/NLP based mechanisms. For example, the ML Spec. H/W 3820 may include one or more of neural processors, FPGA, DSP, GPU etc.

An AR/VR Spec H/W 3822 may also correspond to the hardware layer 3400 and depict specialized hardware for executing the AR/VR device-related simulations. The AR/VR Spec H/W 3822 may include one or more of accelerometer/gyro/GPS, VR ready GPU, mobile GPU streamlined for VR, etc.

The ML Spec. API 3840 correspond to the hardware interface layer 3300 for executing the ML/NLP algorithms based on the underlying hardware. For example, the frameworks may be one or more or Tensorflow, cafe, Natural Language Toolkit (NLTK), GenSim, ARM Compute etc. AR/VR Spec. An AR/VR Spec. API 3842 may correspond to the hardware interface layer 3300 and may include one or more of AR Core, AR Kit, Unity, Unreal, etc.

An NLP/ML logic 3850 corresponds to the processing layer 3200, while the AR/VR simulation 3852 corresponds to the application layer 3100. The knowledge database 4000 may be remotely accessible through cloud. In other example, the knowledge database 4000 may partly reside on cloud and partly on-device based on usage statistics.

The VR objects DB 5000 may refer various virtual reality models that will be used to create and animate a virtual/augmented scene as described in the present embodiment. The VR objects DB 5000 may be remotely accessible through cloud. In other example, the VR objects DB 5000 may partly reside on the cloud and partly on-device based on usage statistics.

An output & presentation 3860 for rendering output and presentation depicts the presentation/output to allow the simulation and scores to be audio-visually communicated to the user. The output & presentation 3860 may be manifested as a display cum touch screen, monitor, speaker, projection screen etc.

General purpose hardware and drivers 3030 may correspond to the device 3000 as referred in FIG. 23 and instantiate drivers for the general purpose hardware units as well as application-specific units 3820 and 3822

In an example, the NLP/ML mechanism and AR/VR simulations underlying the device 3000 may be remotely accessible and cloud based, thereby being remotely accessible through a network connection. A computing device such as a VR/AR device may be configured for remotely accessing the NLP/ML modules and AR/VR simulation modules may include skeleton elements such as a microphone, a camera a screen/monitor, a speaker etc.

FIG. 23 is a block diagram of the device 3000 providing a virtual audience according to another embodiment of the disclosure.

The device 3000 may be a computer system and operate as a standalone device or may be connected, e.g., using a network, to other computer systems or peripheral devices.

In a networked deployment, the device 3000 may operate in the capacity of a server or as a client user computer in a server-client user network environment, or as a peer computer system in a peer-to-peer (or distributed) network environment.

The device 3000 may also be implemented as or incorporated across various devices, such as a VR device, personal computer (PC), a tablet PC, a personal digital assistant (PDA), a mobile device, a palmtop computer, a communications device, a web appliance, or any other machine capable of executing a set of instructions (sequential or otherwise) that specify actions to be taken by that machine.

Further, while the single device 3000 is illustrated, the term "system" may also be taken to include any collection of systems or sub-systems that individually or jointly execute a set, or multiple sets, of instructions to perform one or more computer functions.

The device 3000 may include a processor 3450, e.g., a central processing unit (CPU), a graphics processing unit (GPU), or both. The processor 3450 may be a component in a variety of systems. For example, the processor 3450 may be part of a standard personal computer or a workstation. The processor 3450 may be one or more general processors, digital signal processors, application specific integrated circuits, field programmable gate arrays, servers, networks, digital circuits, analog circuits, combinations thereof, or other now known or later developed devices for analysing and processing data. The processor 3450 may implement a software program, such as code generated manually (i.e., programmed).

The device 3000 may include a memory 3460 that may communicate via a bus 3700. The memory 3460 may include, but not limited to, computer readable storage media such as various types of volatile and non-volatile storage media, including, but not limited to, random access memory, read-only memory, programmable read-only memory, electrically programmable read-only memory, electrically erasable read-only memory, flash memory, magnetic tape or disk, optical media and the like. In an example, the memory 3460 may include a cache or random access memory for the processor 3450. In another example, the memory 3460 is separate from the processor 1802, such as a cache memory of a processor, the system memory, or other memory. The memory 3460 may be an external storage device or database for storing data. The memory 3460 is operable to store instructions executable by the processor 3450. The functions, acts or tasks illustrated in the figures or described may be performed by the programmed processor 3450 executing the instructions stored in the memory 3460. The functions, acts or tasks are independent of the particular type of instructions set, storage media, processor or processing strategy and may be performed by software, hardware, integrated circuits, firm-ware, micro-code and the like, operating alone or in combination. Likewise, processing strategies may include multiprocessing, multitasking, parallel processing and the like.

As shown, the device 3000 may or may not further include a display 3610, such as a liquid crystal display (LCD), an organic light emitting diode (OLED), a flat panel display, a solid state display, a cathode ray tube (CRT), a projector, or other now known or later developed display device for outputting determined information. The display 3610 may act as an interface for the user to see the functioning of the processor 3450, or specifically as an interface with the software stored in the memory 3460 or in the drive unit 3500.

In addition, the device 3000 may include a user input device 3620 configured to allow a user to interact with any of the components of device 3000.

The processor 3450 may control the microphone 3812 to receive a voice signal indicating a user's speech.

The processor 3450 may convert the received speech signal into text, determine a topic for speech based on the converted text, determine a plurality of entities included in the speech based on the determined topic, generate a question for the question using the determined plurality of entities and provide a virtual audience uttering the generated question.

The processor 3450 may control the speaker 3401 to output the voice signal indicating the question, thereby providing the virtual audience that utters the question, and control the display 3610 to display a character representing the virtual audience together with the voice signal.

In addition, the processor 3450 may determine a logical relationship between a pair of entities among the plurality of entities, and generate a question with respect to the user's speech based on the determined logical relationship.

Further, the processor 3450 may control the communication interface 3630 to receive a document related to the topic from a document DB based on the determined topic.

In addition, the processor 3450 may determine the plurality of entities included in the received document, determine a logical relationship between the plurality of entities included in the speech and the pair of entities among the plurality of entities included in the received document, and, based on the logical relationship, generate the question with respect to the user's speech.

Further, the processor 3450 may control the user input device 3620 to receive a user input for inputting a document, determine a plurality of entities included in the input document, determine a logical relationship between a pair of entities among the plurality of entities included in the speech and the plurality of entities included in the input document, and generate the question with respect to the user's speech based on the logical relationship.

In addition, the processor 3450 may generate a plurality of questions for the speech using the determined plurality of entities, and may control the display 3610 to display the generated plurality of questions. In addition, the processor 3450 may control the user input device 3620 to receive a user input for selecting one of a plurality of questions, and provide the virtual audience uttering a selected question among the generated questions.

In addition, the processor 3450 may detect a previously determined trigger text in the converted text and provide the virtual audience uttering the generated question as the trigger text is detected.

In addition, the processor 3450 may calculate a time during which the voice signal is not continuously received and provide the virtual audience uttering the generated question as the calculated time exceeds a previously determined threshold time.

In addition, the processor 3450 may determine a difficulty level for the generated question, determine a profile corresponding to the determined difficulty level, and provide the virtual audience so that the virtual audience corresponding to the determined profile may utter the question.

In addition, the processor 3450 may receive a user's answer to the question and may output reaction information of the virtual audience to the user's answer.

The device 3000 may also include a disk or optical drive unit 3500. The drive unit 3500 may include a computer-readable medium 3510 in which one or more sets of instructions 3452, e.g. software, can be embedded. Further, the instructions 3452 may embody one or more of the methods or logic as described. In a particular example, the instructions 3452 may reside completely, or at least partially, within the memory 3460or the processor 3450 during execution by the device 3000.

The disclosure may include a computer-readable medium that includes instructions 3452 or receive and execute the instructions 3452 responsive to a propagated signal so that a device connected to a network 3640 may communicate voice, video, audio, images or any other data over the network 3640. Further, the instructions 3452 may be transmitted or received over the network 3640 via a communication interface 3630 or using a bus 3700. The communication interface 3630 may be a part of the processor 3450 or may be a separate component. The communication interface 3630 may be created in software or may be a physical connection in hardware. The communication interface 3630 may be configured to connect with a network 3640, external media, the display 3610, or any other components in the device 3000, or combinations thereof. The connection with the network 3640 may be a physical connection, such as a wired Ethernet connection or may be established wirelessly as discussed later. Likewise, the additional connections with other components of the device 3000 may be physical or may be established wirelessly. The network 3640 may alternatively be directly connected to the bus 3700.

The network 3640 may include wired networks, wireless networks, Ethernet AVB networks, or combinations thereof. The wireless network may be a cellular telephone network, an 802.11, 802.16, 802.20, 802.1Q or WiMax network. Further, the network 3640 may be a public network, such as the Internet, a private network, such as an intranet, or combinations thereof, and may utilize a variety of networking protocols now available or later developed including, but not limited to TCP/IP based networking protocols. The system is not limited to operation with any particular standards and protocols. For example, standards for Internet and other packet switched network transmission (e.g., TCP/IP, UDP/IP, HTML, and HTTP) may be used.

While specific language has been used to describe the disclosure, any limitations arising on account of the same are not intended. As would be apparent to a person in the art, various working modifications may be made to the method in order to implement the inventive concept as taught herein.

The drawings and the forgoing description give examples of embodiments. Those skilled in the art will appreciate that one or more of the described elements may well be combined into a single functional element. Alternatively, certain elements may be split into multiple functional elements. Elements from one embodiment may be added to another embodiment. For example, orders of processes described herein may be changed and are not limited to the manner described herein.

Moreover, the actions of any flow diagram need not be implemented in the order shown; nor do all of the acts necessarily need to be performed. Also, those acts that are not dependent on other acts may be performed in parallel with the other acts. The scope of embodiments is by no means limited by these specific examples. Numerous variations, whether explicitly given in the specification or not, such as differences in structure, dimension, and use of material, are possible. The scope of embodiments is at least as broad as given by the following claims.

Benefits, other advantages, and solutions to problems have been described above with regard to specific embodiments. However, the benefits, advantages, solutions to problems, and any component(s) that may cause any benefit, advantage, or solution to occur or become more pronounced are not to be construed as a critical, required, or essential feature or component of any or all the claims.

**Claims**

1. A method, performed by a device, of providing a virtual audience, the method comprising:

   receiving a voice signal indicating a speech of a user;
   converting the speech in the received voice signal into text;
   determining a topic of the speech based on the converted text;
   identifying a plurality of entities included in the speech that are relevant to the determined topic;
   generating questions applicable to the speech using the identified plurality of entities included in the speech; and
   providing a virtual audience uttering the generated questions.

2. The method of claim 1, further comprising:

   receiving a document related to the topic from a document database (DB) based on the determined topic; and
   identifying a plurality of entities included in the received document,
   wherein the generating of the questions applicable to the speech using the identified plurality of entities included in the speech comprises:

      determining a logical relationship between a pair of entities among the identified plurality of entities included in the speech and the identified plurality of entities included in the received document; and
      generating the questions applicable to the speech based on the logical relationship.

3. The method of claim 1, further comprising:

   receiving a document from a user ; and
   determining a plurality of entities included in the received document,
   wherein the generating of the questions applicable to the speech using the determined plurality of entities comprises:

      determining a logical relationship between a pair of entities among the plurality of entities included in the speech and the plurality of entities included in the received document; and
      generating the questions applicable to the speech based on the logical relationship.

4. The method of claim 1, wherein:

   the generating of the questions applicable to the speech using the identified plurality of entities comprises generating a plurality of questions applicable to the speech using the identified plurality of entities,
   the method further comprising receiving a user input for selecting one of the plurality of questions, and
   the providing of the virtual audience uttering the generated questions comprises providing the virtual audience uttering the selected question.

5. The method of claim 1, wherein the providing of the virtual audience uttering the generated questions comprises:

   detecting a trigger text in the converted text; and
   providing the virtual audience uttering the generated questions when the trigger text is detected.

6. The method of claim 1, wherein the providing of the virtual audience uttering the generated questions comprises:

   calculating a time during which the voice signal is not continuously received; and
   when the calculated time exceeds a previously determined threshold time, providing the virtual audience uttering the generated questions.

7. The method of claim 1, further comprising:

   receiving an answer of the user to the question; and

outputting response information of the virtual audience to the answer of the user.

8. The method of claim 7, further comprising determining an answer to the question, wherein the outputting of the response information of the virtual audience to the answer of the user comprises outputting the response information of the virtual audience based on a degree to which the answer of the user is similar to the determined answer.

9. A device comprising:

   a microphone;
   a memory storing one or more instructions; and
   a processor configured to execute the one or more instructions to:

   control the microphone to receive a voice signal indicating a speech of a user;
   convert the speech in the received voice signal into text;
   determine a topic of the speech based on the converted text;
   identify a plurality of entities included in the speech that are relevant to the determined topic;
   generate questions applicable to the speech using the identified plurality of entities included in the speech; and
   provide a virtual audience uttering the generated questions.

10. The device of claim 9, further comprising a communicator,
    wherein the processor is further configured to:

    control the communicator to receive a document related to the topic from a document databased (DB) based on the determined topic;
    identify a plurality of entities included in the received document;
    determine a logical relationship between a pair of entities among the identified plurality of entities included in the speech and the identified plurality of entities included in the received document; and
    generate the questions applicable to the speech based on the logical relationship.

11. The device of claim 9, further comprising a user inputter,
    wherein the processor is further configured to:

    control the user inputter to receive a document from a user ;
    determine a plurality of entities included in the received document;
    determine a logical relationship between a pair of entities among the plurality of entities included in the speech and the plurality of entities included in the received document; and
    generate the questions applicable to the speech based on the logical relationship.

12. The device of claim 9, further comprising a user inputter,
    wherein the processor is further configured to:

    generate a plurality of questions applicable to the speech using the identified plurality of entities;
    control the user inputter to receive a user input for selecting one of the plurality of questions; and
    provide the virtual audience uttering the selected question.

13. The device of claim 9, wherein the processor is further configured to:

    detect a trigger text in the converted text; and
    provide the virtual audience uttering the generated questions when the trigger text is detected.

14. The device of claim 9, wherein the processor is further configured to:

    calculate a time during which the voice signal is not continuously received; and
    when the calculated time exceeds a previously determined threshold time, provide the virtual audience uttering the generated questions.

15. A non-transitory computer-readable recording medium on which a program for performing any one of claims 1 to 8 in a computer is recorded.

# FIG. 1

**FIG. 2**

EP 4 075 411 A1

# FIG. 3

START

RECEIVE VOICE SIGNAL INDICATING
SPEECH OF USER — S310

CONVERT RECEIVED SPEECH SIGNAL INTO TEXT — S320

DETERMINE TOPIC WITH RESPECT TO
SPEECH BASED ON CONVERTED TEXT — S330

DETERMINE PLURALITY OF ENTITIES INCLUDED
IN SPEECH BASED ON DETERMINED TOPIC — S340

GENERATE QUESTIONS WITH RESPECT TO
SPEECH USING DETERMINED PLURALITY OF ENTITIES — S350

PROVIDE VIRTUAL AUDIENCE
UTTERING GENERATED QUESTIONS — S360

END

# FIG. 4

3000

**Application Layer** — 3100

**Processing Layer** — 3200

## Simulation Manager — 3110

| Profile 1 | Profile 2 |
|---|---|
| 3112 Feedback Manager | 3116 Randomizer |
| 3114 Profile Mapper | 3118 Scene Mapper |

## Profile Generator — 3120

| Gender | Localization |
|---|---|
| Experience | Audio Profile |

## Scene Generator — 3130

| Location | Audience Count |
|---|---|
| Ambience | Behavior Modulator |

## Topic Modeling Engine — 3210

3212

| Tokenizer | Topic Db |
|---|---|
| Tokenize   Lemmatize | 3214 |
| Normalize   Cleaning | |
| POS | Word2Vec |
| | Skip Anagram — 3216 |

## Topic Modeling Engine — 3220

| 3221 Topic mapper | 3222 Entity Recognizer | 3223 Text/Speech to QLA |
|---|---|---|
| 3224 Knowledge DR Interface | | 3225 QA Fetcher |

## Relevance Manager — 3230

| 3231 Cosine Similarity | 3232 Question Validator | 3238 |
|---|---|---|
| 3233 Question Categorizer | 3234 Answer Validator | QA Db |

4000

## Knowledge Data base (pre trained QA db)

29

# FIG. 5A

START

RECEIVE VOICE SIGNAL
INDICATING SPEECH OF USER — S510

CONVERT RECEIVED
SPEECH SIGNAL INTO TEXT — S520

DETERMINE TOPIC WITH RESPECT TO
SPEECH BASED ON CONVERTED TEXT — S530

DETERMINE PLURALITY OF ENTITIES INCLUDED
IN SPEECH BASED ON DETERMINED TOPIC — S540

DETERMINE LOGICAL RELATIONSHIP BETWEEN
PAIR OF ENTITIES AMONG DETERMINED
PLURALITY OF ENTITIES — S550

GENERATE QUESTIONS WITH RESPECT TO
SPEECH OF USER BASED ON DETERMINED
LOGICAL RELATIONSHIP — S560

PROVIDE VIRTUAL AUDIENCE UTTERING
GENERATED QUESTIONS — S570

END

# FIG. 5B

# FIG. 5C

BINARY RELATIONSHIP
(ENTITY 3, ENTITY 1)
& CONTEXT

520

ENTITY1

510

ENTITY3

BINARY RELATIONSHIP
(ENTITY 1, ENTITY 2)
& CONTEXT

BINARY RELATIONSHIP
(ENTITY 3, ENTITY 2)
& CONTEXT

530

ENTITY2

# FIG. 6

Entity Table 600

QA Tuple

610

620

| Entity 1 | → | Q | A | Score | → | Q | A | Score | → | Q | A | Score |

| Entity 2 | → | Q | A | Score | → | Q | A | Score | → | Q | A | Score |

⋮

| Entity n | → | Q | A | Score | → | Q | A | Score | → | Q | A | Score |

# FIG. 7

START

RECEIVE VOICE SIGNAL
INDICATING SPEECH OF USER — S710

CONVERT RECEIVED SPEECH SIGNAL INTO TEXT — S720

DETERMINE TOPIC WITH RESPECT TO
SPEECH BASED ON CONVERTED TEXT — S730

RECEIVE DOCUMENT RELATED TO TOPIC FROM
DOCUMENT DB BASED ON DETERMINED TOPIC — S740

DETERMINE PLURALITY OF ENTITIES INCLUDED
IN SPEECH AND PLURALITY OF ENTITIES
INCLUDED IN RECEIVED DOCUMENT — S750

DETERMINE LOGICAL RELATIONSHIP BETWEEN
PAIR OF ENTITIES AMONG PLURALITY OF ENTITIES
INCLUDED IN SPEECH AND PLURALITY OF
ENTITIES INCLUDED IN RECEIVED DOCUMENT — S760

GENERATE QUESTIONS WITH RESPECT TO SPEECH
OF USER BASED ON LOGICAL RELATIONSHIP — S770

PROVIDE VIRTUAL AUDIENCE
UTTERING GENERATED QUESTIONS — S780

END

# FIG. 8A

TEXT → Entity Recognizer — 3222

Topic Modeling Engine — 3210

TOPIC

ENTITY DB — 3240

ENTITY, $E_i$

STANDARD BINARY RELATIONSHIP TEMPLATE DB — 3250

$<E_i, R_j, ->$

RELATIONSHIP, $R_j$

$<E_i, R_j, E_k>$

(+)

TOPIC

DOCUMENT DB — 3260

RELATED DOCUMENT

Text/Speech to Q/A — 3223

QUESTION, ANSWER

QA DB — 3238

# FIG. 8B

TEXT

3210

Topic Modeling
Engine

$W_{1t} T_{1t}$

$W_{2t} T_{2t}$

$W_{3t} T_{3t}$

$W_{4t} T_{4t}$

QA DB

3260

# FIG. 8C

# FIG. 9A

TEXT→ Entity Recognizer ⊢ 3222

3210

Topic Modeling Engine ⊢ TOPIC

ENTITY DB ⊢ 3240

ENTITY, $E_i$

STANDARD BINARY RELATIONSHIP TEMPLATE DB — 3250

$\langle E_i, R_j, \_ \rangle$

RELATIONSHIP, $R_j$

( + )

$\langle E_i, R_j, E_k \rangle$ ⌐ 3223

Text/Speech to Q/A

QUESTION-ANSWER SET

3620

USER INPUT DEVICE

URL, FILE

EXPECTED QUESTION

QA DB ⊢ 3238

# FIG. 9B

INPUT QUESTION DATA — 910

DATA TYPE

920 — EXPECTED QUESTION DIRECT INPUT

930 — URL

940 — FILE

NEXT

3000

# FIG. 10

START

RECEIVE VOICE SIGNAL
INDICATING SPEECH OF USER — S1010

CONVERT RECEIVED SPEECH
SIGNAL INTO TEXT — S1020

GENERATE PLURALITY OF QUESTIONS
WITH RESPECT TO SPEECH
BASED ON CONVERTED TEXT — S1030

RECEIVE USER INPUT FOR SELECTING
ONE OF PLURALITY OF QUESTIONS — S1040

PROVIDE VIRTUAL AUDIENCE
UTTERING SELECTED QUESTION — S1050

END

# FIG. 11

# FIG. 12

# FIG. 13

```
        ┌─────────┐
        │  START  │
        └─────────┘
             │
             ▼
┌──────────────────────────────────┐
│       RECEIVE VOICE SIGNAL        │───── S1310
│     INDICATING SPEECH OF USER     │
└──────────────────────────────────┘
             │
             ▼
┌──────────────────────────────────┐
│ CONVERT RECEIVED SPEECH SIGNAL INTO TEXT │───── S1320
└──────────────────────────────────┘
             │
             ▼
┌──────────────────────────────────┐
│     GENERATE PLURALITY OF QUESTIONS WITH     │───── S1330
│ RESPECT TO SPEECH BASED ON CONVERTED TEXT │
└──────────────────────────────────┘
             │
             ▼
┌──────────────────────────────────┐
│ DETERMINE DIFFICULTY LEVEL OF GENERATED QUESTION │───── S1340
└──────────────────────────────────┘
             │
             ▼
┌──────────────────────────────────┐
│ DETERMINE PROFILE CORRESPONDING TO DETERMINED │
│ DIFFICULTY LEVEL, AND PROVIDE VIRTUAL AUDIENCE │───── S1350
│   SO THAT VIRTUAL AUDIENCE CORRESPONDING TO   │
│   DETERMINED PROFILE UTTERS QUESTION          │
└──────────────────────────────────┘
             │
             ▼
        ┌─────────┐
        │   END   │
        └─────────┘
```

# FIG. 14

TOPIC IDENTIFIED FROM TEXT

TOPICS PATCHED FROM
BINARY RELATIONSHIPS

$W_{1t}, T_{1t}$

$W_{1r}, T_{1r}$

$W_{2t}, T_{2t}$

$W_{2r}, T_{2r}$

CONSINE SIMILARITY

$W_{3t}, T_{3t}$

$W_{3r}, T_{3r}$

$W_{4t}, T_{4t}$

$W_{4r}, T_{4r}$

$$Sim = \sum_{i,j=1..4} (w_{it}\, w_{jr}\mathbf{T_{it}} . \mathbf{T_{jr}} / ||T_{it}|| . ||T_{jr}||) / \sum_{i,j=1..4} (w_{it}\, w_{jr})$$

# FIG. 15

# FIG. 16

TOPIC TRANSITION

TOPIC 1

3238

QA DB
TOPIC 1

TOPIC PROFILE 1

TOPIC 2

3238

QA DB
TOPIC 2

TOPIC PROFILE 2

# FIG. 17

# FIG. 18

RESPONSE

3466
QUESTION
SEQUENCER

FOLLOW-UP
QUESTION

3464
RELATED QUESTION
CACHE

ORIGINAL QUESTION

3116
RANDOMIZER

ORIGINAL QUESTION

3238
QA DB

# FIG. 19

QUESTION

PROVIDE RESPONSE
AS PER ANSWER
3464

VIRTUAL
AUDIENCE

VR USER —100

3000

RESPONSE TO
ANSWER

VOICE DATA | ANSWER

EASY
QUESTION =>
AMATEUR

HARD
QUESTION =>
MANAGE

MEDIUM
QUESTION =>
MANAGE

GENERATE
QUESTIONS
AND ANSWERS

CATEGORIZED
QUESTIONS

EASY QUESTION

MEDIUM QUESTION

HARD QUESTION

AGE

GENDER

LANGUAGE

COUNTRY

EXPERTISE

**FIG. 20**

# FIG. 21

3000

| Hardware Interface Layer | 3300 | | Hardware Layer | 3400 |
|---|---|---|---|---|

| 3301 Voice Modulator | 3312 UI Modulator |
|---|---|
| 3302 Template Generation | 3313 Audio Managers |
| 3303 Alignment Engine | 3314 Render Engine |
| 3304 Focus Sync Engine | 3315 Capture Events |
| 3305 Display Manager | 3316 Bio Metric Manager |
| 3306 Proximity Manager | 3317 Memory Manager |
| 3307 Pinch Glove | 3318 Tracking System |
| 3308 Scene Graph | 3319 Behavior Graph |
| 3309 Open GL | 3320 Network Manager |
| 3310 GPS Manager | 3321 Bluetooth Manager |
| 3311 File System | 3322 I/O Manager |

| 3401 Speaker | 3412 Graphic Card |
|---|---|
| 3402 I/O Devices | 3413 Head Phone |
| 3403 Alignment Engine | 3414 Haptic Device |
| 3404 Focus Sensor | 3415 Camera |
| 3405 ALU | 3416 Bio Metric Sensor |
| 3406 Proximity Sensor | 3417 Registers |
| 3407 Pinch Sensor | 3418 Tracking Sensor |
| 3408 Near Field Communication (NFC) | 3419 Auxiliary Sensor |
| 3450 Processor | 3420 Network Interface Card (NIC) |
| 3410 GPS (Global positioning system) | 3421 Wi-fi connectivity |
| 3460 Primary Memory | 3470 Secondary Memory |

# FIG. 22

EP 4 075 411 A1

# FIG. 23

3000

3812
Microphone

Processor
3452
3450
Instructions

3610
Display

3620
User Input Device

Memory
3452
3460
Instructions

3630
Communication Interface

3500 — Drive Unit

3510 — Computer Readable Medium

3452 — Instructions

3640
Network

3401
Speaker

## INTERNATIONAL SEARCH REPORT

| International application No. |
| --- |
| **PCT/KR2021/004968** |

### A. CLASSIFICATION OF SUBJECT MATTER

**G09B 19/04**(2006.01)i; **G09B 9/00**(2006.01)i; **G10L 15/26**(2006.01)i

According to International Patent Classification (IPC) or to both national classification and IPC

### B. FIELDS SEARCHED

Minimum documentation searched (classification system followed by classification symbols)

G09B 19/04(2006.01); G06F 17/30(2006.01); G06F 40/166(2020.01); G06F 40/20(2020.01); G06F 9/44(2006.01); G06Q 30/06(2012.01); G09B 17/00(2006.01); G09B 9/00(2006.01); G10L 13/08(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 연설(speech), 가상 청중(virtual audience), 질문(question), 엔티티(entity)

### C. DOCUMENTS CONSIDERED TO BE RELEVANT

| Category* | Citation of document, with indication, where appropriate, of the relevant passages | Relevant to claim No. |
| --- | --- | --- |
| Y | KR 10-2019-0038900 A (MAGIC LEAP, INC.) 09 April 2019 (2019-04-09)<br>See paragraphs [0021], [0025], [0080] and [0101] and figure 2. | 1,5-9,13-15 |
| A | | 2-4,10-12 |
| Y | US 2018-0225131 A1 (TATA CONSULTANCY SERVICES LIMITED) 09 August 2018 (2018-08-09)<br>See paragraphs [0027]-[0028] and figure 3. | 1,5-9,13-15 |
| Y | KR 10-2015-0044495 A (COMBUSTECH CO., LTD.) 27 April 2015 (2015-04-27)<br>See paragraphs [0054]-[0067]. | 6-8,14 |
| Y | US 2019-0392730 A1 (PITCHVANTAGE LLC) 26 December 2019 (2019-12-26)<br>See paragraphs [0056] and [0105]-[0106]. | 7-8 |
| A | WO 2019-017922 A1 (INTEL CORPORATION) 24 January 2019 (2019-01-24)<br>See claims 1-11. | 1-15 |

☐ Further documents are listed in the continuation of Box C.    ☑ See patent family annex.

| | |
| --- | --- |
| *   Special categories of cited documents:<br>"A"  document defining the general state of the art which is not considered to be of particular relevance<br>"D"  document cited by the applicant in the international application<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
| --- | --- |
| **04 August 2021** | **04 August 2021** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

**INTERNATIONAL SEARCH REPORT**
Information on patent family members

International application No.

**PCT/KR2021/004968**

| Patent document cited in search report | | | Publication date (day/month/year) | Patent family member(s) | | | Publication date (day/month/year) |
|---|---|---|---|---|---|---|---|
| KR | 10-2019-0038900 | A | 09 April 2019 | AU | 2017-308914 | A1 | 28 February 2019 |
| | | | | CA | 3033109 | A1 | 15 February 2018 |
| | | | | CN | 109844854 | A | 04 June 2019 |
| | | | | EP | 3497695 | A1 | 19 June 2019 |
| | | | | EP | 3497695 | A4 | 25 December 2019 |
| | | | | JP | 2019-531538 | A | 31 October 2019 |
| | | | | JP | 2021-007003 | A | 21 January 2021 |
| | | | | JP | 6814279 | B2 | 13 January 2021 |
| | | | | KR | 10-2021-0038673 | A | 07 April 2021 |
| | | | | US | 10607609 | B2 | 31 March 2020 |
| | | | | US | 2018-0047395 | A1 | 15 February 2018 |
| | | | | US | 2020-0184975 | A1 | 11 June 2020 |
| | | | | WO | 2018-031745 | A1 | 15 February 2018 |
| US | 2018-0225131 | A1 | 09 August 2018 | EP | 3358462 | A1 | 08 August 2018 |
| KR | 10-2015-0044495 | A | 27 April 2015 | KR | 10-1519591 | B1 | 13 May 2015 |
| US | 2019-0392730 | A1 | 26 December 2019 | US | 10446055 | B2 | 15 October 2019 |
| | | | | US | 2016-0049094 | A1 | 18 February 2016 |
| WO | 2019-017922 | A1 | 24 January 2019 | None | | | |

Form PCT/ISA/210 (patent family annex) (July 2019)